(19) Europäisches Patentamt / European Patent Office / Office européen des brevets

(11) **EP 3 085 141 B1**

(12) **EUROPEAN PATENT SPECIFICATION**

(45) Date of publication and mention of the grant of the patent:
**05.01.2022 Bulletin 2022/01**

(51) Int Cl.:
**H04W 16/28** (2009.01)     **H04B 7/024** (2017.01)
**H04B 7/026** (2017.01)     **H04B 7/0456** (2017.01)
**H04B 7/06** (2006.01)

(21) Application number: **14816411.4**

(22) Date of filing: **26.11.2014**

(86) International application number:
**PCT/IB2014/066368**

(87) International publication number:
**WO 2015/092580 (25.06.2015 Gazette 2015/25)**

(54) **BEAMFORMING FOR COORDINATED MULTIPOINT COMMUNICATIONS**

STRAHLFORMUNG FÜR KOORDINIERTE MEHRPUNKTKOMMUNIKATIONEN

FORMATION DE FAISCEAU POUR COMMUNICATIONS MULTIPOINT COORDONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 US 201361917552 P**

(43) Date of publication of application:
**26.10.2016 Bulletin 2016/43**

(73) Proprietor: **Telefonaktiebolaget LM Ericsson (publ)**
**164 83 Stockholm (SE)**

(72) Inventors:
• **SEYEDMEHDI, Hossein**
**Kanata, Ontario K2K OC3 (CA)**
• **BOUDREAU, Gary**
**Kanata, Ontario K2K 2K9 (CA)**

(74) Representative: **Zacco Sweden AB**
**Valhallavägen 117**
**Box 5581**
**114 85 Stockholm (SE)**

(56) References cited:
• **ALCATEL-LUCENT SHANGHAI BELL ET AL: "UL Transmit Beamforming for UL MIMO Enhancement", 3GPP DRAFT; R1-112422_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 19 August 2011 (2011-08-19), XP050537836, [retrieved on 2011-08-19]**
• **S HOSSEIN SEYEDMEHDI ET AL: "An Efficient Clustering Algorithm for Device-to-Device Assisted Virtual MIMO", ARXIV.ORG > CS > ARXIV:1312.2983, 10 December 2013 (2013-12-10), pages 1-9, XP055183146,**
• **CATT: "Proposal of multiple sites coordination for LTE-A TDD", 3GPP DRAFT; R1-084290, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050317568, [retrieved on 2008-11-05]**
• **HUI WON JE ET AL: "Long-Term Channel Information-Based CoMP Beamforming in LTE-Advanced Systems", GLOBAL TELECOMMUNICATIONS CONFERENCE (GLOBECOM 2011), 2011 IEEE, IEEE, 5 December 2011 (2011-12-05), pages 1-6, XP032119552, DOI: 10.1109/GLOCOM.2011.6134356 ISBN: 978-1-4244-9266-4**
• **None**

**Description**

TECHNICAL FIELD

This disclosure generally relates to wireless communications and more particularly to a virtual device and its method for beamforming in clusters of wireless devices for coordinated multipoint communications.

BACKGROUND

In a typical cellular radio system, wireless devices (also known as wireless terminals, mobile stations, and/or user equipment units (UEs)) communicate via a radio access network network (RAN) to one or more core networks. Wireless devices may be, for example, mobile telephones ("cellular" telephones), desktop computers, laptop computers, tablet computers, and/or any other devices with wireless communication capability to communicate voice and/or data with a radio access network. The radio access network may cover a geographical area which is divided into cell areas. Each cell may be identified by an identity within the local radio area, which is broadcast in the cell. Each cell area may be served by an associated network node, which may also be called a base station or a radio base station (RBS). In some networks, the network node may be called "NodeB" or, in the case of Long Term Evolution, an eNodeB. In a Wi-Fi™ implementation, the network node may be called an access point (AP). Generally, the cell is a geographical area where radio coverage is provided by the radio base station equipment at a base station site. A base station communicates over the air interface operating on radio frequencies with the wireless devices within range of the base station.

Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. The Universal Terrestrial Radio Access Network (UTRAN) is essentially a radio access network using wideband code division multiple access for user equipment units (UEs). The Third Generation Partnership Project (3 GPP) has undertaken to evolve further the UTRAN and GSM based radio access network technologies.

Specifications for Evolved Universal Terrestrial Radio Access Network (E- UTRAN) are ongoing within the 3rd Generation Partnership Project (3 GPP). Another name used for E-UTRAN is the Long Term Evolution (LTE) Radio Access Network (RAN). Long Term Evolution (LTE) is a variant of a 3GPP radio access technology wherein the network nodes are connected directly to a core network rather than to radio network controller (RNC) nodes. In general, in LTE the functions of a radio network controller node are performed by the radio base stations nodes. As such, the radio access network of an LTE system has an essentially "flat" architecture comprising radio base station nodes without reporting to radio network controller nodes.

The evolved UTRAN comprises evolved network nodes, e.g., evolved NodeBs or eNBs, providing user-plane and control-plane protocol terminations toward the wireless devices. The eNB hosts the following functions (among other functions not listed): (1) functions for radio resource management (e.g., radio bearer control, radio admission control), connection mobility control, dynamic resource allocation (scheduling); (2) mobility management entity (MME) including, e.g., distribution of paging message to the eNBs; and (3) User Plane Entity (UPE), including IP Header Compression and encryption of user data streams; termination of U-plane packets for paging reasons, and switching of U-plane for support of UE mobility. The eNB hosts the PHYsical (PHY), Medium Access Control (MAC), Radio Link Control (RLC), and Packet Data Control Protocol (PDCP) layers that include the functionality of user-plane header-compression and encryption. The eNodeB also offers Radio Resource Control (RRC) functionality corresponding to the control plane. The eNodeB performs many functions including radio resource management, admission control, scheduling, enforcement of negotiated UL QoS, cell information broadcast, ciphering/deciphering of user and control plane data, and compression/decompression of DL/UL user plane packet headers.

The LTE standard is based on multi-carrier based radio access schemes such as Orthogonal Frequency-Division Multiplexing (OFDM) in the downlink and SC-FDMA in the uplink. Orthogonal FDM's (OFDM) spread spectrum technique distributes the data over a large number of carriers that are spaced apart at precise frequencies. This spacing provides the "orthogonality" in this technique which reduces interference. The benefits of OFDM are high spectral efficiency, resiliency to RF interference, and lower multi-path distortion.

Because of growth in wireless data, operators are motivated to increase the capacity of their wireless networks. In the case of 3GPP wireless networks, carrier spectrum is limited and this results in pressure to increase the spectral efficiency (Mbps/MHz) of the 3GPP air interface.

Existing technologies that improve the spectral efficiency (bps/MHz) of the 3GPP air interface (or the Wi-Fi™ air interface) are typically based on solutions that focus on a mixture of techniques such as interference cancellation via enhanced receiver design such as beam forming, interference cancellation via intelligent scheduling, Multiple Input Multiple Output (MIMO) techniques that rely on multiple antennas in one wireless device or an access point (AP), and/or microcellular diversity techniques such as Coordinated Multipoint (CoMP).

One proposed beamforming technique termed 'interference alignment' (IA) has been shown to have an asymptotic sum-capacity of a K-user interference channel that scales as K/2. In this technique, all the users transmit on the co-channel while trying to map their interference footprint on a dimension orthogonal to that of the desired signal. However, the prevalent method for managing interference (as widely used in current standards including LTE and IEEE 802.11) includes transmitting signals on orthogonal channels either in time, frequency, or space. The drawback of this orthogonalization is that the asymptotic sum-rate remains constant as the number of users increases.

Inspired by the interference alignment technique, many distributed beamforming algorithms have been developed for the MIMO interference channels. Almost all of these beamforming techniques rely on iterative solutions for determining beamforming weights. Further, almost all of the existing solutions for iterative beamforming (IBF) assume that wireless devices are equipped with multiple antennas. However, most current wireless devices (especially legacy UEs) have only one transmit antenna, and therefore, the interference alignment gains cannot be achieved for such devices.

Document "UL Transmit Beamforming for UL MIMO Enhancement", Alcatel-Lucent et.al., 3GPP draft R1-112422, 19.08.2011, may be construed to disclose a technique pertaining to uplink beamforming which are studied for possible UL enhancement. Such techniques could be relevant for small cells with a high probability of LOS propagation. Based on some idealized assumptions, it is observed that DOA-based UL beamforming may be beneficial for improving uplink performance and reducing inter-cell interference. However, practical non-idealities must be taken into account if such schemes are to be considered, and UE complexity needs to be evaluated.

Document "An Efficient Clustering Algorithm for Device-to-Device Assisted Virtual MIMO", S. Hossein Seyedmehdi et.al, 10.12.2013, arXiv:1312.2983v1, may be construed to disclose a technique pertaining to utilization of mobile devices (MDs) as decode-and-forward relays in a device-to-device assisted virtual MIMO (VMIMO) system. Single antenna MDs are randomly distributed on a 2D plane according to a Poisson point process, and only a subset of them are sources leaving other idle MDs available to assist them (relays). An algorithm is developed to cluster each source with a subset of available relays to form a VMIMO system under a limited feedback assumption.

Document "Proposal of multiple sites coordination for LTE-A TDD", CATT, 3GPP draft R1-084290, 05.11.2008, may be construed to disclose a technique pertaining to downlink CoMP, and two coordinated multi-point transmission approaches are presented taking into account the UL/DL reciprocal property of the channel. By designing beams in coordinating cells carefully, the interference among cells is mitigated and/or the signal quality of cell-edge UE is strengthened.

Document "Long-Term Channel Information-Based CoMP Beamforming in LTE-Advanced Systems", Hui Won Je et.al, Global Telecommunications Conference (GLOBECOM) 2011, IEEE, 05.12.2011, may be construed to disclose a technique pertaining to CoMP transmission and reception being a network multiple-input multiple- output (MIMO) technology considered in 3GPP LTE-Advanced systems. In order to improve reliability and capacity of the services for the user equipments (UEs) at the cell edges, CoMP utilizes cooperation among neighboring enhanced node Bs (eNBs). Accordingly, backhaul delay for sharing control signals among eNBs is to be carefully handled as UE mobility increases in a fading channel environment; otherwise, CoMP operations derived from inaccurate channel state information (CSI) of neighboring eNBs can severely degrade the system performance. CoMP beamforming schemes are propised using long-term CSI such as spatial correlation matrices instead of instantaneous CSI of neighboring cells. Since long- term CSI varies relatively slowly, the proposed scheme is inherently robust even when a UE moves at a high speed and/or the backhaul delay is large.

SUMMARY

The invention is defined by all features present in and required by the independent claims 1, 11 and 12 which represent embodiments of the invention. Further features are defined in dependent claims.**The subject-matter of the following description and figures, even if described or named as "embodiment(s)", "invention(s)", "aspect(s)", "example(s)" or "disclosure(s)" etc., does not or does not fully and thus only partly correspond to the invention as defined in the claims (e.g. due to one or more features present in and required by the independent claims which are missing in the "embodiment(s)", "invention(s)", "aspect(s)", "example(s)" or "disclosure(s)" etc., for example due to the use of expressions like "may", "preferably", "optional(ly)", "can", "could", "as an/for example" etc. rendering one or more features present in and required by the independent claims as optional), is therefore either not covered by the claimed invention and does not describe part of the claimed invention, or is not covered by the claims and is useful to highlight specific aspects of the claims.**

In certain example implementations, the proposed solutions may provide techniques for performing iterative beamforming in virtual devices composed of wireless devices that have only a single antenna allowing network providers to improve spectral efficiency through the exploitation of the densification of the wireless network.

In particular embodiments, a wireless device in a cluster set of wireless devices is configured to operate as a virtual device to determine a beamforming weight for coordinated multipoint communication with a first network node.

The wireless device includes circuitry containing instructions which, when executed, cause the wireless device to receive a first network reference signal (RS) from the first network node. The first network RS signal may be received via a first channel and may be coded with a first network beamforming weight associated with the cluster set. A second network RS coded with a second network beamforming weight may also be received via the first channel. The second network RS may be received from a second network node. A device beamforming weight may be calculated based on the first network RS received from the first network node and the second network RS received from the second network node. The calculation may be performed during a first iteration and may be independent of any channel information from any other wireless device in the cluster set of wireless devices operating as a virtual device. The calculation of the first iteration may be independent of any channel information associated with a second channel between at least one the wireless devices of the cluster set and the first network node. A first device RS coded with the device beamforming weight may be sent to the first network node via the first channel.

In certain embodiments, the steps may be performed a number of additional iterations to iteratively update the device beamforming weight. For example, the device beamforming weight may be iteratively updated in accordance with an iterative beamforming algorithm. In a particular embodiment, for example, the iterative beamforming algorithm may optimize a collection of Signal to Interference and Noise Ratios (SINRs).

In some embodiments, the channel information associated with the second channel between the first network node and the wireless devices of the cluster set may include at least one of a device beamforming weight, a channel response, and Channel State Information (CSI). Prior to receiving the first and second network RS, the wireless device may join the cluster set of wireless devices. For example, the wireless device may join the cluster set to form the virtual device in communication with the first network node and the virtual devices may include a Multiple-Input-Multiple-Output (MIMO) array formed by at least one antenna from each one of the wireless devices in the cluster set. In a particular embodiment, for example, the wireless device may send a message to the first network node for the wireless device to join the cluster set if a respective data rate between the wireless device and each of the other wireless devices of the cluster set is greater than a cluster uplink data rate. Each respective data rate may be based on a channel quality parameter of a device-to-device channel between the wireless device and each of the other wireless devices of the cluster set. As another example, the wireless device may send, to the first network node via the first channel, at least one channel quality parameter and a data rate of a device-to-device channel between the wireless device and each of the other wireless devices of the cluster set. As still another example, the wireless device may send the message to the first network node for the wireless device to join the cluster set in response to determining that a respective data rate between the wireless device and each of the other wireless devices of the cluster set is greater than an uplink rate between the wireless device and the first network node.

In some embodiments, the wireless device may communicate with the first network node using a first RAT and the other wireless devices of the cluster set using a first or a second radio access technology (RAT). For example, the second RAT may be selected from the group consisting of a short range wireless technology, an unlicensed spectrum technology, a Wireless Local Area Network (WLAN) technology, a Wi-Fi™ technology, a Bluetooth™ technology, an infrared technology, a 3rd Generation Partnership Project 3GPP technology, a Universal Mobile Telecommunications System UMTS technology, a Universal Terrestrial Radio Access Network UTRAN technology, a Long Term Evolution (LTE), a Long Term Evolution Unlicensed (LTE-U) technology, and a resource pool technology. As another example, the first RAT may be selected from the group consisting of a long range wireless technology, an unlicensed spectrum technology, a Wireless Local Area Network (WLAN) technology, a Wi-Fi™ technology, a 3rd Generation Partnership Project 3GPP technology, a Universal Mobile Telecommunications System UMTS technology, a Universal Terrestrial Radio Access Network UTRAN technology, a Long Term Evolution (LTE), and a Long Term Evolution Unlicensed (LTE-U) technology.

In a particular embodiment, a method for determining a beamforming weight for coordinated multipoint communication with a first network node is performed by a wireless device in a cluster set of wireless devices configured to operate as a virtual device. The method includes receiving from a first network node, via a first channel, a first network RS coded with a first network beamforming weight associated with the cluster set. A second network RS is received from a second network node via the first channel. A device beamforming weight is calculated based on the first network RS received from the first network node and the second network RS received from the second network node. The calculation may be performed during a first iteration and may be independent of any channel information from any other wireless device in the cluster set of the wireless devices operating as a virtual device. The calculation of the first iteration may also be independent of any channel information associated with a second channel between the other wireless devices of the cluster set and the first network node. A first device RS coded with the device beamforming weight is sent to the first network node via the first channel.

In certain embodiments, the steps of the method may be performed for a number of additional iterations to iteratively update the device beamforming weight. For example, the device beamforming weight may be iteratively updated in accordance with an iterative beamforming algorithm. In a particular embodiment, the device beamforming weight may be iteratively updated in accordance with an iterative beamforming algorithm that optimizes a collection of Signal to Interference and Noise Ratios (SINRs).

In some embodiments, the channel information associated with the second channel between the first network node and the other wireless devices of the cluster set includes at least one of a device beamforming weight, a channel response, and Channel State Information (CSI). Prior to receiving the first and second network RS, the method may include the wireless device joining the cluster set to form the virtual device in communication with the first network node. In a particular embodiment, the virtual device may include a Multiple-Input-Multiple-Output (MIMO) array formed by at least one antenna from each one of the wireless devices in the cluster set. For example, a message may be sent to the first network node for the wireless device to join the cluster set if a respective data rate between the wireless device and each of the other wireless devices of the cluster set is greater than a cluster uplink data rate. Each respective data rate may be determined based on a channel quality parameter of a device-to-device channel between the wireless device and each of the other wireless devices of the cluster set. As another example, the method may include sending, to the first network node via the first channel, at least one channel quality parameter and a data rate of a device-to-device channel between the wireless device and each of the other wireless devices of the cluster set. As still another example, the method may include sending the message to the first network node for the wireless device to join the cluster set in response to determining that a respective data rate between the wireless device and each of the other wireless devices of the cluster set is greater than an uplink rate between the wireless device and the first network node.

In some embodiments, the method may include the first wireless device communicating with the first network node using a first RAT and communicating with the other wireless devices of the cluster set using a second radio access technology (RAT). For example, the first RAT may be selected from the group consisting of a long range wireless technology, an unlicensed spectrum technology, a Wireless Local Area Network (WLAN) technology, a Wi-Fi™ technology, a 3rd Generation Partnership Project 3GPP technology, a Universal Mobile Telecommunications System UMTS technology, a Universal Terrestrial Radio Access Network UTRAN technology, a Long Term Evolution (LTE), and a Long Term Evolution Unlicensed (LTE-U) technology. As another example, the second RAT may be selected from the group consisting of a short range wireless technology, an unlicensed spectrum technology, a Wireless Local Area Network (WLAN) technology, a Wi-Fi™ technology, a Bluetooth™ technology, an infrared technology, a 3rd Generation Partnership Project 3GPP technology, a Universal Mobile Telecommunications System UMTS technology, a Universal Terrestrial Radio Access Network UTRAN technology, a Long Term Evolution (LTE), a Long Term Evolution Unlicensed (LTE-U) technology, and a resource pool technology.

Some embodiments of the disclosure may provide one or more technical advantages. For example, certain embodiments may improve spectral efficiency (Mbps/MHz) of the 3GPP air interface by exploiting the ever-increasing density of wireless devices in the network. Specifically, the performance of the LTE or Wi-Fi™ network maybe enhanced by using device-to-device assistance from idle (non-scheduled) wireless devices to form a virtual MIMO device to improve the performance of the scheduled user. Certain embodiments may provide improvements in the areas of admission control (RAC), scheduling (L2), and physical layer (LI).

Another technical advantage may be the mitigation of interference by neighboring cells. As a result, the overall throughput (bps/Hz) of the network may be increased and the quality of service improved. In addition to improving capacity and throughput, an advantage may be the reduction or elimination of coverage holes for wireless devices in poor coverage areas. Still another technical advantage may be that communication overhead between wireless devices operating in a cluster may be reduced. Additionally, the complexity of computation of precoding weights in each wireless device may be significantly reduced.

Yet another advantage may be the elimination or reduction of additional processing requirements in the base station as related to the uplink or downlink CoMP Additionally, certain embodiments may provide additional advantages with regard to the formation of clusters of wireless devices operating as a virtual device. For example, virtual MIMO gains may be achieved in a distributed manner that minimizes computational load at each network node. As another example, a technical advantage may be the minimization of bandwidth requirements between network nodes to achieve Coordinated Multipoint (CoMP) type gains.

Some embodiments may benefit from some, none, or all of these advantages. Other technical advantages may be readily ascertained by one of ordinary skill in the art.

BRIEF DESCRIPTION OF THE DRAWINGS

For a more complete understanding of the present invention and its features and advantages, reference is now made to the following description, taken in conjunction with the accompanying drawings, in which:

FIGURE 1 is a block diagram illustrating an example of a network, according to certain embodiments;
FIGURE 2 is a block diagram illustrating an example network system that uses MIMO techniques to improve spectral efficiency, according to certain embodiments;
FIGURE 3 is an example flow diagram that depicts an iterative beam forming process for improving spectral efficiency, according to certain embodiments;

FIGURE 4 is a block diagram illustrating an example network system implementing the clustering of wireless devices for forming a virtual device for the coordinated multipoint transmission and reception of data, according to certain embodiments;

FIGURE 5 is a block diagram illustrating an example virtual device for beamforming, according to certain embodiments;

FIGURE 6 is an example flow diagram that depicts an iterative beam forming process for improving spectral efficiency of virtual devices, according to certain embodiments;

FIGURE 7 illustrates a method for iterative beamforming by a wireless device in a cluster of wireless devices forming a virtual device for coordinated multipoint communication, in certain embodiments;

FIGURE 8 illustrates an example method for joining a virtual device formed by a cluster of wireless devices, according to certain embodiments;

FIGURE 9 illustrates another example method for joining a virtual device formed by a cluster of wireless devices, according to certain embodiments;

FIGURE 10 is a block diagram illustrating embodiments of a wireless device, according to certain embodiments;

FIGURE 11 is a block diagram illustrating embodiments of a computer networking virtual apparatus, according to certain embodiments;

FIGURE 12 is a block diagram illustrating embodiments of a radio access node, according to certain embodiments;

FIGURE 13 is a block diagram illustrating embodiments of a core network node, according to certain embodiments.

DETAILED DESCRIPTION

Particular embodiments are described in FIGURES 1-13 of the drawings, like numerals being used for like and corresponding parts of the various drawings. FIGURE 1 is a block diagram illustrating an example of a network 100 that includes one or more wireless communication devices 110 and a plurality of network nodes 115. The network nodes include radio network nodes 115, and core network node 130. In the example, wireless communication device 110A communicates with radio network node 115A over a wireless or radio access network 125. For example, wireless communication device 110A transmits wireless signals to radio network node 115A and/or receives wireless signals from radio network node 115A. The wireless signals contain voice traffic, data traffic, control signals, and/or any other suitable information.

A radio network node 115 refers to any suitable node of a radio access network/base station system. In various embodiments, radio network node 115 may be an access point (AP), relay node, or mobile device. Radio network node 115 interfaces (directly or indirectly) with core network node 130. Interconnecting network (not depicted) refers to any interconnecting system capable of transmitting audio, video, signals, data, messages, or any combination of the preceding. Interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

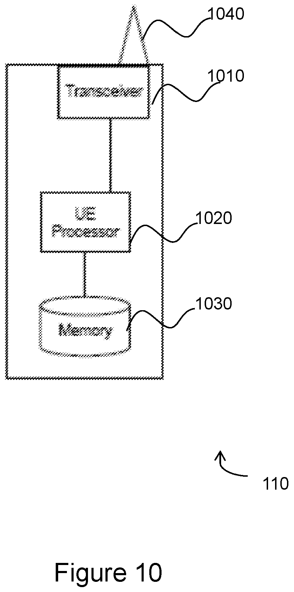

Core network node 130 manages the establishment of communication sessions and various other functionality for wireless communication devices 110. Wireless communication device 110 exchanges certain signals with core network node 130 using the non-access stratum layer. In non-access stratum (NAS) signaling, signals between wireless communication device 110 and core network node 130 pass transparently through radio network nodes 115. Examples of wireless communication device 110, network nodes 115, and core network node 130 are described with respect to FIGURES 10, 12, and 13, respectively.

In certain embodiments, an operator of network 100 may be motivated to increase the capacity of the network by, for example, increasing the spectral efficiency (Mbps/MHz) of the air interface. Some technologies for improving spectral efficiency include interference cancellation via an enhanced receiver design that combines one or more of iterative beam forming (IBF), interference cancellation via intelligent scheduling, Multiple Input Multiple Output (MIMO) techniques that rely on multiple antennas in one wireless device 110, and/or microcellular diversity techniques such as Coordinated Multipoint (CoMP).

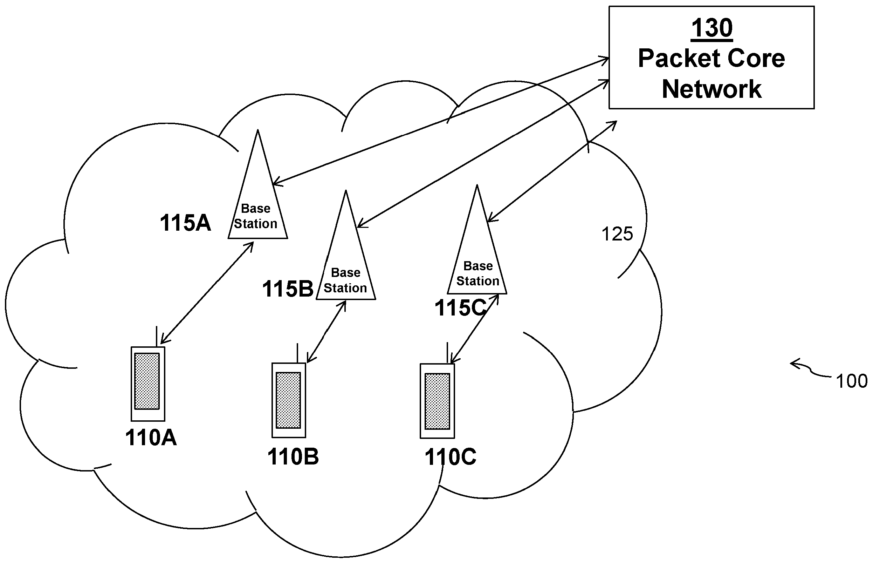

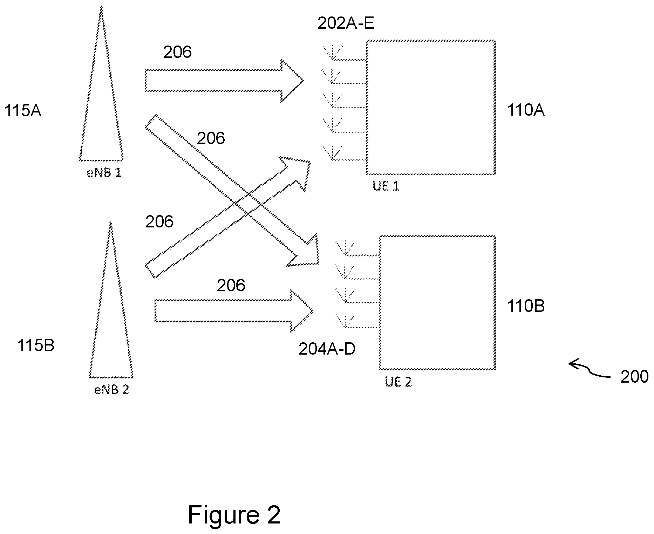

FIGURE 2 is an example network system 200 that uses MIMO techniques to improve spectral efficiency, according to certain embodiments. As depicted, network system 200 includes a pair of radio network nodes 115A and 115B that independently communicate with two wireless devices 110A and 110B. However, it is generally recognized that network system 200 may include any number of network nodes 115 and any number of wireless devices 110. The depicted embodiment is merely one example of a MIMO enabled system.

Each of network nodes 115A-B and wireless devices 110A-B are MIMO enabled. Accordingly, each network node 115A-B and wireless device 110A-B includes multiple antennas to improve communication performance. As depicted for example, first wireless device 110A includes five antennas 202A-E and second wireless device 110B includes four antennas 204A-D. The use of multiple antennas at both the transmitter and the receiver may achieve an array gain that improves spectral efficiency.

However, the multiple signals transmitted and received in network system 200 may create interference, in certain embodiments. For example, the wireless devices 110A-B may be co-channel, thus, interfering with each other. As a result, network system 200 may employ beamforming techniques for decreasing interference and maximizing signal power at the receiver. In general, beamforming, which may also be called spatial filtering, is a signal processing technique used in sensor arrays for directional signal transmission or reception. In certain embodiments, radio nodes 115A-B and wireless devices 110A may use an iterative process to tune transmitter filters based on the received signal.

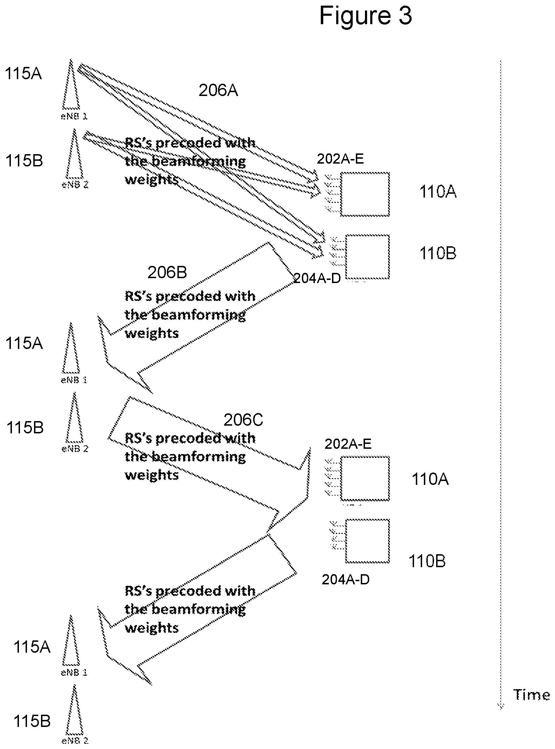

FIGURE 3 is an example flow diagram that depicts an iterative beam forming process for improving spectral efficiency, according to certain embodiments. Specifically, FIGURE 3 depicts an exemplary iterative beam forming process for improving the spectral efficiency of network system 200 of FIGURE 2. As depicted, each of network nodes 115A and 115B transmit first precoded reference signals 206A to each of wireless devices 110A and 110B. Specifically, the precoded reference signals 206A may be precoded with the beamforming weights calculated from all co-channel wireless devices 110. In an LTE implementation, a reference signal (RS) may include a reference symbol. However, any suitable reference signal may be transmitted and received.

Upon receipt of the first reference signals 206A, each of wireless devices 110A and 110B update their beamforming weights based on the received signal 206A. Specifically, the inputs from each antenna 202A-E may be jointly processed by first wireless device 110A. Similarly, the inputs from each antenna 204A-D may be jointly processed by second wireless device 110A-D. Each of wireless devices 110A and 110B may then compute new beamforming weights based on the signals received by each antenna. Accordingly, the beamforming weight for antenna 202B on first wireless device 110A, depends on the received signal on antenna 202A, 202C, 202D, and 202E on the first wireless device 110A. Each of wireless devices 110A and 110B then precodes reference signals 206B with the new beamforming weights and transmits precoded reference signals 206B to network nodes 115A and 115B.

Upon receipt of second reference signals 206B, each of network nodes 115A and 115B update their linear minimum mean square error (MMSE) decoder coefficients based on the received signal 206B. Each of network nodes 115A and 115B then transmit third reference signals 206C to each of wireless devices 110A and 110B. The process continues using this iterative beamforming weight technique until convergence is achieved or until a certain number of iterations is reached. In this manner, the above-described iterative beamforming process includes iterative updates for linear decoders and precoders.

For example, assume a K user interference channel where a wireless device 110A or 110B, as a source, has its own designated destination such as a network node 115A or 115B. The channel input-output relationship may be written as

$$y_k = H_{kk}x_k + \sum_{j \neq k} H_{kj}x_j + n_k \quad \forall k \in \{1, \ldots, K\},$$

where $x_j$ is the transmitted signal by the source $j$ and $y_k$ is the received signal by the destination $k$. The transmit signal is the precoded version of the message $s_k$, i.e.,

$$x_k = v_k s_k$$

where $v_k$ is the precoding vector. The decoder at the destination is a linear decoder $g_k$, i.e.,

$$\hat{s}_k = g_k^T y_k.$$

The MMSE based updates are designed to minimize the weighted sum-MSE

$$\sum_k w_k \varepsilon_k$$

where $\varepsilon_k$ is the mean square error (MSE) for user $k$, and $w_k$ is its weight. Optimizing for minimum MSE results in the

$$g_k^{\mathrm{new\,T}} = v_k^{\mathrm{H}} H_{kk}^{\mathrm{H}} \left( \sum_j H_{kj} v_j v_j^{\mathrm{H}} H_{kj}^{\mathrm{H}} + \sigma^2 \mathbf{I} \right)^{-1}$$

following updates:                                                                                                    and

$$v_k^{\mathrm{new}} = \left( \sum_j \frac{w_j}{w_k} H_{jk}^{\mathrm{H}} g_j^* g_j^{\mathrm{T}} H_{jk} + \lambda \mathbf{I} \right)^{-1} H_{kk}^{\mathrm{H}} g_k^*$$

The above described process for iterative beamforming assumes that each wireless device 110A and 110B is a MIMO-enabled receiver/transmitter and, thus, is equipped multiple antennas 202A-E and 204A-D, respectively. In such embodiments, the processor associated with the wireless device 110A has knowledge of all channels on which the precoded reference signals are received for that wireless device 110A. However, wireless device 110A has no such knowledge of the channels on which the precoded reference signals are received by 110B. Stated differently, wireless device has knowledge of the channel conditions between each antenna of the particular wireless device 110 and the transmitting network node 115 but no knowledge of the channel conditions of other wireless devices 110. However, most current wireless devices 110 may have only one transmit antenna. As a result, the processor of such wireless devices 110 will only have knowledge of the channel conditions between the single antenna and network node 115. Accordingly, the interference alignment gains may not be achieved for non-MIMO wireless devices. However, interference alignment gains may be improved where multiple single antenna wireless devices 110 are clustered to form a virtual device.

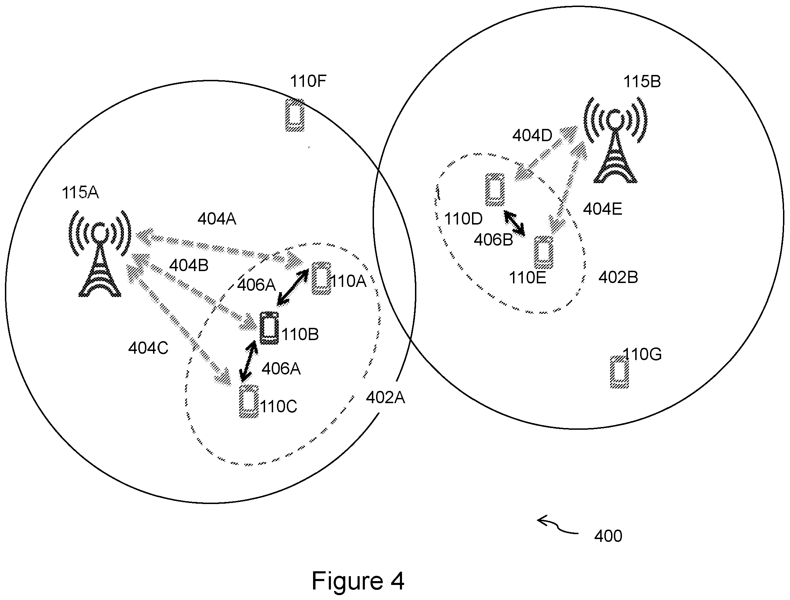

FIGURE 4 is a block diagram illustrating an example network system 400 implementing the clustering of wireless devices 110 for forming a virtual device for the coordinated multipoint transmission and reception of data, according to certain embodiments. As depicted, network system 400 includes multiple network nodes 115A-B, which each communicate with one or more wireless devices 110 within a cluster set 402. For example, as depicted, network system 400 includes a first network node 115A that communicates with a first wireless device 110A of a first cluster set 402A via a first communication channel 404A, a second wireless device 110B via a second communication channel 404B, and third wireless device 110C via a third communication channel 404C. Wireless devices 110A-C in first cluster set 402A communicate with each other via a device-to-device (D2D) communication channel 406A. Similarly, second network node 115B communicates with fourth wireless devices 110D and fifth wireless device 110E of a second cluster set 402B via fourth communication channel 404D and fifth communication channel 404E, respectively. Wireless devices 110D-E communicate with each other via D2D channel 406B.

In operation, the wireless devices 110 in each cluster set 402A-B may form a virtual device. In general, a virtual device is a set of wireless devices 110 that are grouped together and exchange messages before transmitting such messages to an access point such as a network node 115. In the illustrated embodiment, for example, wireless devices 110A-C may form a first virtual device while wireless devices 110D-E form a second virtual device. Though each cluster set 402 and, thus, virtual device is depicted as including multiple wireless devices 110, it is recognized that a virtual device may include only one wireless device 110.

Within each cluster set 402A-B, the wireless devices 110 may fully or partially exchange messages so that each wireless device 110 has knowledge of each other's messages. For example, in a particular embodiment, each cluster 402A-B of wireless devices 110 may exchange data with each other before jointly transmitting a composite message of the data of all the wireless devices 110 to radio network nodes 115A-B. In certain embodiments, wireless devices 110 in a cluster set 402A-B may share N bits of information. To perform the exchange of data, the wireless devices 110 consume T units of time and W units of bandwidth. The intra cluster rate (ICR) for that cluster may be calculated as N / (T * W).

To reduce interference, messages between the wireless devices 110 and their respective network node 115 and messages between the wireless devices 110 may be communicated using different radio access technologies (RATs). In general, a RAT may include any standard or medium carrying communications and some examples may include LTE, LTE-A, IEEE 802.11 (Wi-Fi™), IEEE 802.15c (Wi-Gi), or any other suitable radio access technology.

In certain embodiments, for example, messages exchanged between any of wireless devices 110A-C and their network node 115A may be communicated via a communication channel 404A-C associated with a first radio access technology (RAT1). In a particular embodiment, the RAT1 may include a long range wireless technology, an unlicensed spectrum technology, a Wireless Local Area Network (WLAN) technology, a Wi-Fi™ technology, a 3rd Generation Partnership Project 3GPP technology, a Universal Mobile Telecommunications System UMTS technology, a Universal Terrestrial Radio Access Network UTRAN technology, a Long Term Evolution (LTE), or a Long Term Evolution Unlicensed (LTE-U) technology.

In contrast, messages exchanged among and between the wireless devices 110A-C of the cluster set 402A may be communicated via second communication channel 406A that is associated with a second radio access technology (RAT2). Similarly, messages exchanged among and between the wireless devices 110D-E of cluster set 402B may be communicated via second communication channel 406B that is also associated with RAT2 or even a third radio access technology (RAT3). In a particular embodiment, for example, either or both of the RAT2 or RAT3 may include a short-range, device-to-device RAT selected from the group consisting of a Wireless Local Area Network (WLAN) technology, a Wi-Fi™ technology, a Bluetooth™ technology, an infrared technology, a 3rd Generation Partnership Project 3GPP technology, a Universal Mobile Telecommunications System (UMTS) technology, a Universal Terrestrial Radio Access Network (UTRAN) technology, a Long Term Evolution (LTE) technology, a Long Term Evolution Unlicensed (LTE-U) technology, and a resource pool technology. In contrast, the RAT1 may include a RAT technology selected from the group consisting of a long range technology, an unlicensed spectrum technology, a WLAN technology, a Wi-Fi™ technology, a 3rd Generation Partnership Project 3GPP technology, a Universal Mobile Telecommunications System (UMTS) technology, a Universal Terrestrial Radio Access Network (UTRAN) technology, a Long Term Evolution (LTE) technology, and a Long Term Evolution Unlicensed (LTE-U) technology. The message exchange can be either coordinated by network nodes 115 or another access point. If the RAT2 is Wi-Fi™ or another similar RAT, the message exchange may be self-configured.

In certain embodiments, each network node 115A-B may serve and/or be associated with a geographic cell region. For example, first network node 115A may serve first cell 406A while second network node 115B may serve second cell 406B. Thus, first network node 115A may serve wireless device 110F though wireless device 110F is not a member of first cluster set 402A. Likewise, second network node 115B may serve wireless device 110G though wireless device 110G is not a member of second cluster set 402B.

Various approaches may be used for the formation of virtual devices. In a particular embodiment, wireless devices 110A-C and 110D-E may join a pre-existing cluster group 402A or 402B, respectively, and, thus, join a virtual device that has been previously formed. In the depicted embodiment, for example, if wireless devices 110A-C are already clustered to form a virtual device that exchanges messages with the first network node 115A, wireless device 110F may join cluster set 402A to form a larger virtual device. To do so in an LTE implementation, wireless device 110F may acquire channel quality information for each of wireless devices 110A-C in RAT1 by listening to the sounding reference signals (SRSs) from wireless devices 110A-110C.

Specifically, wireless device 110F may listen to the grants to wireless devices 110A-110C to determine the uplink rate of virtual device associated with cluster set 402A to first network node 115A. If the ratio of the channel condition to each of wireless devices 110A, 110B, and 110C to the uplink rate is greater than a certain threshold, wireless device 110F may announce itself to network node 115A as an eligible candidate for cluster set 402A. After receiving the announcement from wireless device 110F, network node 115A may decide whether wireless device 110F should be allowed to join cluster set 402A. In certain embodiments, network node 115A may request wireless device 110F to transmit some other information before allowing wireless device 110F to join cluster set 402A. For example, network node 115A may request wireless device 110F to transmit channel quality indicators to all wireless devices 110A-C in cluster set 402A prior to allowing wireless device 110F to join cluster set 402A. In certain embodiments, network node 115A may grant or not grant the request from wireless device 110F to join cluster set 402A based on the channel quality indicators received by wireless devices 110A-C.

In certain embodiments, any one or more of wireless devices 110A-C may be removed from a cluster set 402A. For example, in a particular embodiment, each wireless device 110A-C in cluster set 402A may constantly or periodically monitor the channel quality of communication channel 206A in the RAT2 between that wireless device 110A-C and the other wireless devices 110A-C in the cluster set 402A. If the device-to-device rate is less than a certain threshold that is set and announced by network node 115A, a wireless device may request to be removed from the cluster set 402A and, thus, be dropped from the virtual device, in a particular embodiment. Network node 115A may grant the request to be dropped or may request the corresponding wireless devices 110A-C to send the device-to-device channel quality indicators to network node 115A, in various embodiments.

According to certain embodiments, network node 115A may initiate clustering of wireless devices 110A-C. For example, network node 115A may request all of some of wireless devices 110A-C and/or other wireless devices 110, such as wireless device 110F, in cell 406A to activate a cluster discovery mode. In discovery mode, wireless devices 110A-C and 110F may start monitoring their RAT2 channels with other wireless devices 110A-C and 110F.

Network node 115A may have knowledge about the geographical location of wireless devices 110A-C and 110F in cell 406A. Based on this knowledge, network node 115A may request wireless devices 110A-C that are within close proximity to each other to form cluster set 402A. Alternatively, if wireless devices 110A and 110B are already clustered to form cluster set 402A and network node 115A determines that wireless device 110C is within close proximity of cluster set 402A, network node 115A may request wireless device 110C to join the virtual device associated with cluster set 402A. In a particular embodiment, for example, network node 115A may request wireless device 110C to provide the channel quality between wireless device 110C and wireless devices 110A and 110B. After receiving the information, network node 115 may grant wireless device 110C permission to join the cluster set 402A that forms the virtual device.

In certain embodiments, the clustering of wireless devices 110A-C may be coordinated between network nodes. For example, first network node 115A may communicate with second network node 115B to exchange channel information. In a particular embodiment, for instance, network node 115A and network node 115B may exchange channel information to and from all wireless devices 110A-C and 110D-E. Radio network nodes 115A and 115B may then determine the appropriate wireless devices 110 that should be included in each cluster.

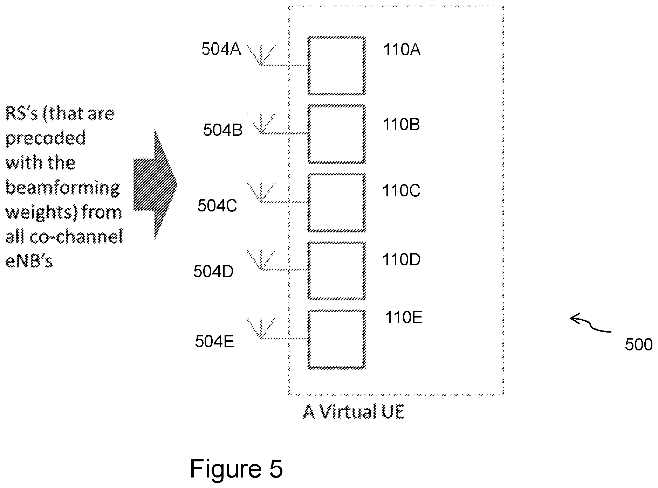

FIGURE 5 is a block diagram illustrating an example virtual device for beamforming, according to certain embodiments. As depicted, virtual device 500 includes a cluster of five wireless devices 110A-E. Each wireless device 110A-E includes an antenna 504A-E, respectively. However, for the purposes of transmitting data to network node 115A, the antennas 504A-E of wireless devices 110A-E act as one virtual wireless device. As a result, wireless devices 110A-E transmit the same I/Q samples.

Because each wireless device 110A-E has its own independent processor, each wireless device 110A-E is aware only of the channel conditions for that individual wireless device 110A-E (i.e., not for the virtual device). For example, wireless device 110A is aware of the channel conditions between itself and the network node 115 but has no knowledge of the channel conditions between wireless device 110B and network node 115. As a result, the iterative beamforming method described above with regard to FIGURES 2 and 3 is not applicable to virtual device 500. By contrast, beamforming by each wireless device 110A-E in virtual device 500 primarily relies on the precoded reference signals known to that wireless device 110A-E and excludes the reference signals on the channels of the other wireless devices 110A-E.

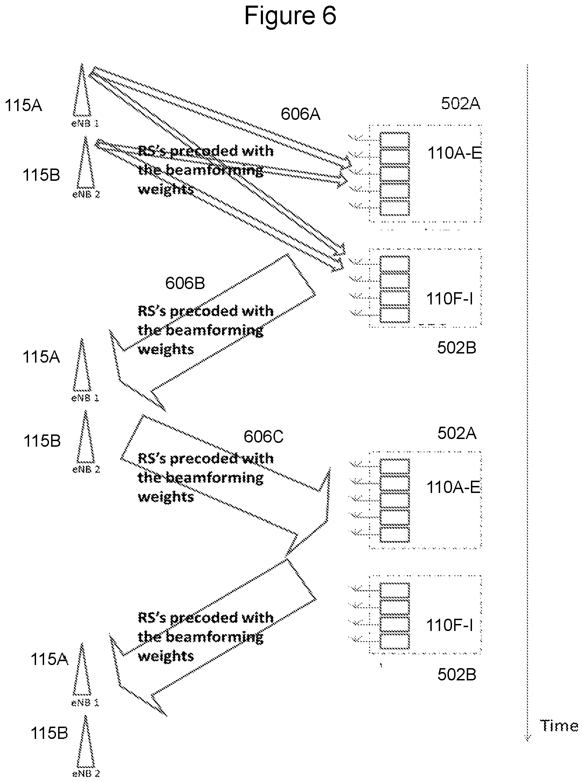

FIGURE 6 is an example flow diagram that depicts an iterative beam forming process for improving spectral efficiency of virtual devices, according to certain embodiments. As depicted, each of network nodes 115A and 115B transmit first precoded reference signals 606A to each of virtual devices 502A and 502B. Virtual device 502A includes five wireless devices 110A-E while virtual device 502B includes four wireless devices 110F-I. In certain embodiments, the output power and phase of the transmission from each wireless device 110A-E and 110F-I may be determined through one of the following coordinated beam forming methods.

In a certain embodiments, beamforming may be implemented using a centralized approach that calculates beamforming weights based on information received through a feedback channel. Specifically, a central processing unit (CPU) may calculate the beamforming coefficients for multiple network nodes 115A-B that serve multiple serving cells. In a particular embodiment, for example, a CPU associated with core controller 130 (depicted in FIGURE 1) or another network node may calculate the beamforming coefficients based on information received from network nodes 115A-B. For example, in a particular embodiment, each network node 115A-B may update the CPU about the channels between itself and the wireless devices 110 assigned to the particular network node 115A-B. The centralized CPU may then calculate the beamforming coefficients based on the information received and convey the calculated beamforming coefficients to the respective network nodes 115A-B. Each of network nodes 115A-B may then transmit the precoded reference signals 606A coded with a first network beamforming weight associated with the cluster set to the wireless devices 110A-I forming virtual devices 502A and 502B. In this context, "include" may refer to an implicit multiplication with the reference signal rather than inclusion in a message with the reference signal.

In other embodiments, beamforming may be implemented using a decentralized approach that calculates beamforming weights based on information received through a reciprocal channel. For example, wireless devices 110A-I and network nodes 115A-B may participate in an iterative procedure at the end of which the beam forming weights are known to wireless devices 110A-I. For this method, it is assumed that participating wireless devices 110A-I and network nodes 115A-B are co-channel. Additionally, it may be assumed that wireless devices 110A-I are aware of the clustering, and each virtual device 502A-B is assigned to a respective network node 115A-B.

First, wireless devices 110A-I select initial values for their beamforming weights. The selected beamforming weights may be selected randomly, in certain embodiments. In other embodiments, the beamforming weights may be selected based on a function of previous beamforming weights. For example, for an LTE RAT, wireless devices 110A-E may then transmit demodulation reference signals (DMRSs) to network nodes 115A-B. Network nodes 115A-B may then calculate the MMSE decoder weights, $g_l$. Each network nodes 115A-B may also calculate a mean squared error (MSE). Based on the calculated MSE, each network node 115A-B may calculate a MSE based weight, w.

$$g_l = \left( \sum_{l' \in \mathcal{L}} \tilde{\mathbf{H}}_{k_l l'} \mathbf{v}_{l'} \mathbf{v}_{l'}^{\dagger} \tilde{\mathbf{H}}_{k_l l'}^{\dagger} + \sigma_N^2 I \right)^{-1} \tilde{\mathbf{H}}_{k_l l} \mathbf{v}_l$$

Network nodes 115A-B may utilize the decoding weights as beamforming weights and transmit a piece of data or a reference signal 606A to wireless devices 110A-I. Network nodes 115A-B may also update wireless devices 110A-I about the MSE based weights. In a particular embodiment, network nodes 115A-B may update wireless devices 110A-I about the MSE based weights using a separate channel designated for MSE weights.

On the receiving side, a first wireless device 110A in virtual device 502A receives the channel information transmitted between network node 115A and second wireless device 110B in the virtual device 502A. Specifically, second wireless device 110B may transmit the channel information to first wireless device 110A. Messages may be exchanged between wireless devices 115A-E in virtual device 502A until all wireless devices 115A-E are informed of the channel information between all wireless devices 115A-E and network node 115A. However, it may be recognized that the exchanging of data may be disabled by network node 115A, in a particular embodiment, to reduce the overhead.

Each wireless device 110A-E of first virtual device 502A calculates its precoding weights based on the network node-to-UE channel and the information obtained from other wireless devices 110A-E in the virtual device 502A, if enabled. Otherwise, each wireless device 110A-E may calculate its pre-coding weights based *only* on the network node-to-UE precoded reference signals received from the network nodes 115A-B. As such, the subsequent update of beamforming weights by the wireless devices 110A-E and 110F-I may depend on the channel gains between network nodes 115A-B and the individual wireless devices in the virtual device 502A-B. This is in contrast to conventional iterative beamforming techniques such as max-SINR, Min-Leakage, Adaptively Weighed MMSE, Interference Pricing, Pricing with Incremental SINR, and other techniques where the channel gains between network nodes 115A-B and all wireless devices 110 in the virtual device may be known. While the knowledge of such channel gains may be helpful, it may be recognized that each wireless device 110A-E and 110F-I only needs to know the channel information between itself and the serving network node 115A-B. In either scenario, the iterative updating of weights in this manner reduces overhead and complexity of the system but has reduced impact on system performance.

The above-described pre-coding updates may be written as follows:

$$v_m = (\xi_m + \lambda_m)^{-1} \left( \mathbf{h}^\dagger_{a_m m} \mathbf{g}_{a_m} w_{a_m} + \psi_m \right)$$

where

$$\xi_m = \sum_{l \in \mathcal{L}} \mathbf{h}^\dagger_{k_l m} \mathbf{g}_l w_l \mathbf{g}^\dagger_l \mathbf{h}_{k_l m}$$

$$\psi_m = \sum_{l \in \mathcal{L}} \sum_{i \in \mathcal{I}_{l,m} \setminus \{m\}} \mathbf{h}^\dagger_{k_l m} \mathbf{g}_l w_l \mathbf{g}^\dagger_l \mathbf{h}_{k_l i} v_i$$

$$\lambda_m = \left[ \frac{-\kappa_1 + \sqrt{\kappa_1^2 - 4\kappa_2}}{2} \right]^+$$

$$\kappa_1 = \xi_m + \xi^\dagger_m$$

$$\kappa_2 = \|\xi_m\|^2 - \frac{\left\| \mathbf{h}^\dagger_{a_m m} \mathbf{g}_{a_m} w_{a_m} + \psi_m \right\|^2}{P_m}$$

where the following notations apply and wireless devices do not exchange channel data amongst themselves, ($\psi_m \leftarrow 0$):

$h_{am}$  Channel between nodes *a* and *m*

$\tilde{r}_l$,  Empirical intra-cluster rate for virtual

$M$  device (VD) *l* Set of mobile devices (MDs); *M*

$$\triangleq \{1, ..., M\}$$

$\kappa$    Set of APs; $\mathcal{K} \triangleq \{M + 1, ..., M + K\}$

$\mathcal{L}$    Set of VDs; $\mathcal{L} \triangleq \{1, ..., L\}$

$I_l$    Set of MDs which belong to VD $l$;

$I_{l,m}$    Set $I_l$ such that $m \in I_l$.

$N_l$    Number of MDs in the VD $l$

$N_k$    Number of antennas in the AP $k$

$l_k$    VD assigned to the AP $k$

$k_l$    AP assigned to the VD $l$

c    Clustering vector; $c_m = l$: MD $m$ is assigned to VD $l$

a    Assignment vector. $a_m = k$: MD $m$ is assigned to AP $k$

This procedure continues with wireless devices 110A-I and network nodes 115A-B exchanging reference signals precoded with the updated beamforming weights until a certain number of iterations are reached or convergence is obtained. For example, upon receipt of the first reference signals 606A, each of wireless devices 110A-E and 110F-I update their beamforming weights based on the received signal 606A, as described above. Each of wireless devices 110A-E and 110F-I then precodes reference signals 606B with the new beamforming weights and transmits precoded reference signals 606B to network nodes 115A and 115B.

Upon receipt of second reference signals 606B, each of network nodes 115A and 115B update their linear minimum mean square error (MMSE) decoder coefficients based on the received signal 606B and then transmit third reference signals 606C to each of wireless devices 110A-E and 110F-I of virtual devices 502A and 502B. The process continues using iterative beamforming until convergence is achieved or until a certain number of iterations are reached.

In particular embodiments, the number of iterations may be fixed. In other embodiments, the number of iterations may be a function of the improvement in the network throughput. For example, the number of iterations may be adapted from one round to another based on different performance metrics or QoS criteria. Simulation results demonstrate that as the number of iterations increases the sum-rate increases, too. The increase in the sum-rate, however, is steep only for the first few iterations and then plateaus after a large number of iterations. Therefore, a network scheduler may choose to terminate the iterative beamforming process after just a few iterations based on the network load. Alternatively, where network load is lower, the network scheduler might choose a longer run of the iterative beamforming process.

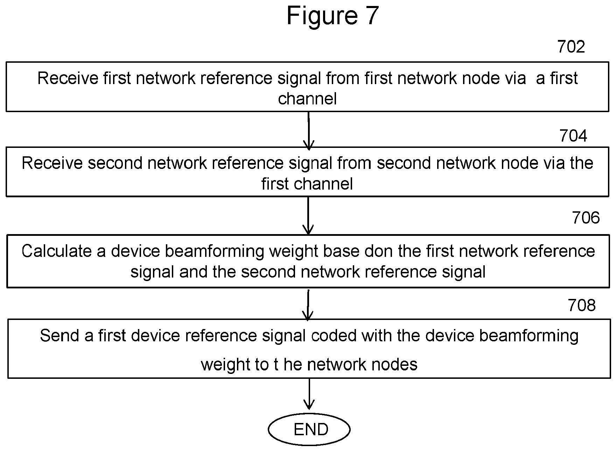

FIGURE 7 illustrates a method for iterative beamforming by a wireless device in a cluster of wireless devices forming a virtual device for coordinated multipoint communication, in certain embodiments. The method may begin when a first network reference signal 606A is received from a first network node 115A via a first channel 404A at step 702. The first network reference signal 606A may be coded with a first network beamforming weight.

At step 704, a second network reference signal 606A is received from a second network node 115B via the first channel 404A. Second network reference signal 606A may be coded with a second network beamforming weight.

At step 706, the receiving wireless device 110A may then calculate a device beamforming weight based on the first network reference signal 606A received from the first network node 115A and the second network RS 606A received from the second network node 115B. In certain embodiments, the calculation of the device beamforming weight is performed during a first iteration and the calculation is independent of any channel information from any other wireless devices 110B-E in the cluster set of wireless devices operating as a virtual device 500. Thus, the calculation of the device beamforming weight may be independent of any channel information that is associated with a second channel between the at least one other wireless communication device 110B-E of the cluster set forming virtual device 500 and the first network node 115A. In a particular embodiment, the calculation is independent of the device beamforming weight, a channel response, and/or channel state information (CSI) associated with the second channel between the at least one other wireless communication device 110B-E of the virtual device 500.

At step 708, the first device reference signal 606B is sent to first network node 115A. The first device reference signal 606B may be sent via the first channel 404A and may be coded with the device beamforming weight calculated by the wireless device 110A.

In particular embodiments, the beamforming weight may be updated based on whether a predefined threshold has been met. For example, the predefined threshold may be a measure of spectral efficiency (e.g., bps/hertz). In another example, the predefined threshold may be a predefined number of iterations. In still another example embodiment, it may be determined whether convergence has been obtained or whether a desired Signal to Interference and Noise Ratio (SINR) has been obtained. Thus, in a particular embodiment, the updating of the device beamforming weight may be performed using an iterative beamforming algorithm that optimizes a SINR.

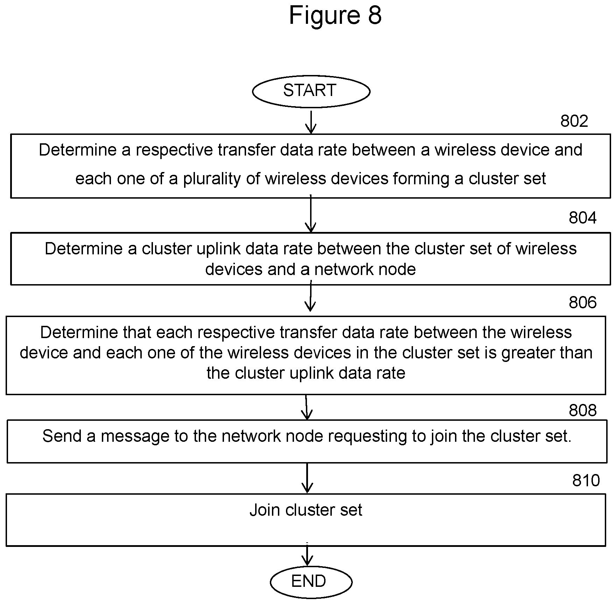

The steps may be performed in any suitable order. Additionally, the method of FIGURE 7 may include more, fewer, or other steps. For example, in certain embodiments, a wireless device such as wireless device 110A of virtual device 502A may request to join the cluster group of virtual device 502A before step 702 is performed. FIGURE 8 illustrates an example method for joining a virtual device formed by a cluster of wireless devices, according to certain embodiments. As illustrated, the method begins when a wireless device such as first wireless device 110A determines a respective transfer data rate between first wireless device 110A and the at least one wireless devices 110B-E of virtual device 502A. In a particular embodiment, each respective data rate may be determined based on a channel quality parameter of a device-to-device channel between first wireless device 110A and each of the wireless devices 110B-E forming the cluster set of virtual device 502A.

At step 804, a cluster uplink data rate may be determined. The cluster uplink data rate may be between the clusters set of wireless devices 110B-E forming virtual device 502A and network node 115A. It is determined at step 806 that the respective data rate between the wireless device 110A and each of the at least one other wireless devices 110B-E of virtual device 502A is greater than the cluster uplink data rate. In response to the determination of step 806, a request message is sent to network node 115A at step 808. The request message may identify that first wireless device 110A wishes to join the cluster of wireless devices 110B-E forming virtual device 502A. First wireless device 110A may then join the cluster of wireless devices 110B-E that form virtual device 506A at step 810. Thereafter, the antenna of first wireless device 110A may form a portion of the MIMO array formed by the antennas of each of wireless devices 110A-E.

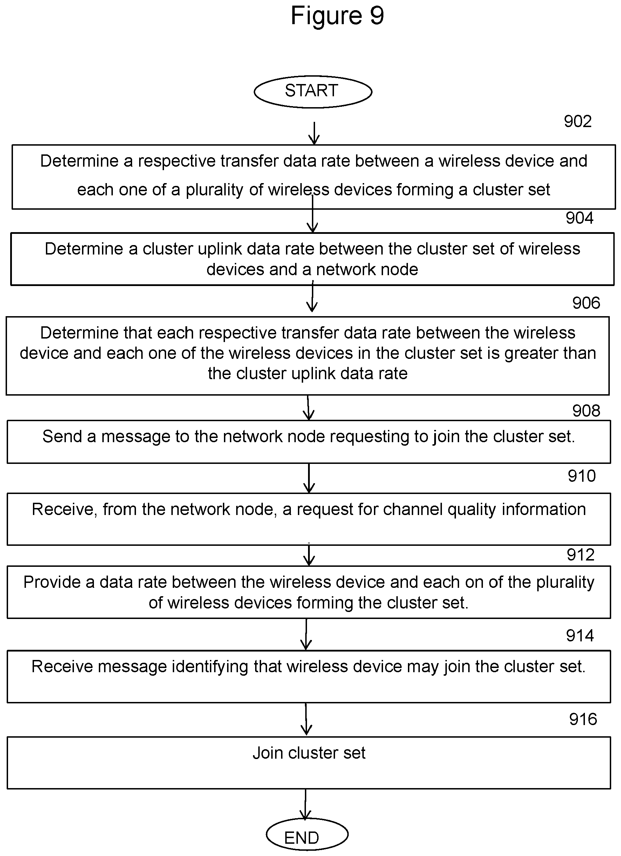

FIGURE 9 illustrates another example method for joining a virtual device formed by a cluster of wireless devices, according to certain embodiments. As illustrated, the method begins when a wireless device such as first wireless device 110A determines a respective transfer data rate between first wireless device 110A and the at least one wireless devices 110B-E of virtual device 502A. In a particular embodiment, each respective data rate may be determined based on a channel quality parameter of a device-to-device channel between first wireless device 110A and each of the wireless devices 110B-E forming the cluster set of virtual device 502A.

At step 904, a cluster uplink data rate may be determined. The cluster uplink data rate may be between the clusters set of wireless devices 110B-E forming virtual device 502A and network node 115A. It is determined at step 906 that the respective data rate between the wireless device 110A and each of the at least one other wireless devices 110B-E of virtual device 502A is greater than the cluster uplink data rate. In response to the determination of step 906, a request message is sent to network node 115A at step 908. The request message may identify that first wireless device 110A wishes to join the cluster of wireless devices 110B-E forming virtual device 502A.

In certain embodiments, network node 115A may require more information from first wireless device 110A before network node 115A allows first wireless device 110A to join virtual device 506A. For example, at step 910, first wireless device 110A may receive a request for channel quality information from network node 115A, in a particular embodiment. In response to the request, first wireless device 110A may provide a channel quality parameter and/or a data rate at step 912. The data rate may be of a device-to-device channel between first wireless device 110A and each one of the wireless devices 110B-E forming virtual device 506A.

At step 914, first wireless device 110A receives a message from network node 115A that identifies that first wireless device 110A may become part of the cluster forming virtual device 506A. First wireless device 110A may then join the cluster of wireless devices 110BE that form virtual device 506A at step 916. Thereafter, the antenna of first wireless device 110A may form a portion of the MIMO array formed by the antennas of each of wireless devices 110A-E.

FIGURE 10 is a block diagram illustrating an example of wireless communication device 110. Examples of wireless communication device 110 include a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, a device-to-device capable device, or another device that can provide wireless communication. A wireless communication device 110 may also be referred to as user equipment (UE), a station (STA), a mobile station (MS), a device, a wireless device, or a terminal in some embodiments. Wireless communication device 110 includes transceiver 1010, processor 1020, and memory 1030. In some embodiments, transceiver 1010 facilitates transmitting wireless signals to and receiving wireless signals from radio network node 115 (e.g., via an antenna 1040), processor 1020 executes instructions to provide some or all of the functionality described above as being provided by wireless communication device 110, and memory 1030 stores the instructions executed by processor 1020.

Processor 1020 includes any suitable combination of hardware and software implemented in one or more modules to execute instructions and manipulate data to perform some or all of the described functions of wireless communication device 110. In some embodiments, processor 1020 includes, for example, one or more computers, one or more central processing units (CPUs), one or more microprocessors, one or more applications, and/or other logic. Processor 1020 may include analog and/or digital circuitry configured to perform some or all of the described functions of mobile device 110. For example, processor 1020 may include resistors, capacitors, inductors, transistors, diodes, and/or any other suitable circuit components.

Memory 1030 is generally operable to store instructions, such as a computer program, software, an application including one or more of logic, rules, algorithms, code, tables, etc. and/or other instructions capable of being executed by a processor. Examples of memory 1030 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other embodiments of wireless communication device 110 include additional components (beyond those shown in FIGURE 10) responsible for providing certain aspects of the wireless communication device's functionality, including any of the functionality described above and/or any additional functionality (including any functionality necessary to support the solution described above).

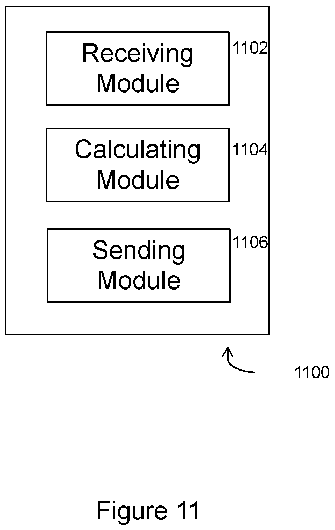

In certain embodiments, wireless device 110 may operate as a computer networking virtual apparatus. FIGURE 11 is a block diagram illustrating a computer networking virtual apparatus 1100. As depicted, the virtual apparatus 1100 includes at least one receiving module 1102, a calculating module 1104, and a sending module 1106. The receiving module 1102 may perform the receiving functions of wireless device 110, as described herein. For example, receiving module may receive a first network reference signal (RS) from network node 115A of network 100. The first network reference signal may be received via a first channel and may be coded with a first network beamforming weight associated with a cluster of wireless devices operating as a virtual device. As another example, receiving module 1102 may receive a second network RS from a second network node 115B. The second network RS may be received via the first channel and may be coded with a second network beamforming weight. In certain embodiments, receiving module 1102 may include a receiver or a transceiver, such as transceiver 1010. The receiving module 1102 may include circuitry configured to wirelessly receive messages and/or signals. In particular embodiments, the receiving module may communicate received messages and/or signals to the calculating module 1104.

Calculating module 1104 may perform the calculating functions of virtual apparatus 1100, as described herein. For example, calculating module 1104 may calculate a device beamforming weight based on the first network RS received from the first network node 115A and the second network RS received from second network node 115B. In certain embodiments, the calculation by calculating module 1104 may be performed during a first iteration and may be independent of any channel information from any other wireless device in the cluster set of wireless devices operating as a virtual device. For example, the calculation of the first iteration may be independent of any channel information associated with a second channel between at least one of the wireless devices of the cluster set and the first network node 115A. In certain embodiments, calculating module 1104 may include or be included in processor 1020. The calculating module may include analog and/or digital circuitry configured to perform any of the functions of calculating module 1104 and/or processor 1020. In particular embodiments, calculating module 1104 may communicate the calculated device beamforming weight to sending module 1106.

Sending module 1106 may perform the transmission functions of virtual apparatus 1100. For example, sending module 1106 may send a first device RS coded with the device beamforming weight to first network node 115A. In a particular embodiment, the first device RS may be send via the first channel. Sending module 1106 may include a transmitter and/or a transceiver such as transceiver 1002. Sending module may include circuitry configured to wirelessly transmit messages and/or signals. In particular embodiments, sending module 1106 may receive messages and/or signals for transmission from calculating module 1104.

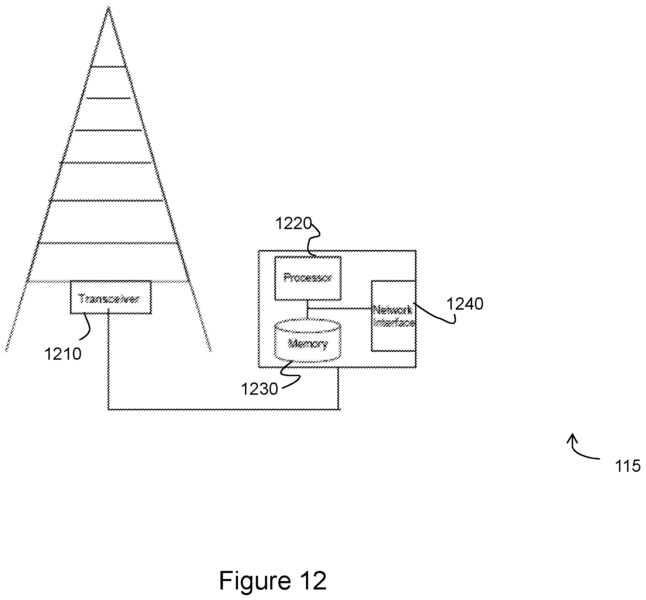

FIGURE 12 is a block diagram illustrating embodiments of network node 115. In certain embodiments, network node 115 includes a radio access node, such as an eNodeB, a node B, a base station, a wireless access point (e.g., a Wi-Fi™ access point), a low power node, a base transceiver station (BTS), transmission points, transmission nodes, remote RF unit (RRU), remote radio head (RRH), a relay node, a UE acting as a relay node, or another suitable radio access node.

Network nodes 115 are deployed throughout network 100 as a homogenous deployment, heterogeneous deployment, or mixed deployment. A homogeneous deployment generally describes a deployment made up of the same (or similar) type of radio access nodes and/or similar coverage and cell sizes and inter-site distances. A heterogeneous deployment generally describes deployments using a variety of types of radio access nodes having different cell sizes, transmit powers, capacities, and inter-site distances. For example, a heterogeneous deployment may include a plurality of low-power nodes placed throughout a macro-cell layout. Mixed deployments include a mix of homogenous portions and heterogeneous portions.

As depicted, network node 115 includes one or more of transceiver 1210, processor 1220, memory 1230, and network interface 1240. Transceiver 1210 facilitates transmitting wireless signals to and receiving wireless signals from wireless communication device 110 (e.g., via an antenna), processor 1220 executes instructions to provide some or all of the functionality described above as being provided by a network node 115, memory 1230 stores the instructions executed by processor 1220, and network interface 1240 communicates signals to backend network components, such as a gateway, switch, router, Internet, Public Switched Telephone Network (PSTN), other network nodes, core network nodes 130, etc.

Processor 1220 includes any suitable combination of hardware and software implemented in one or more modules to execute instructions and manipulate data to perform some or all of the described functions of network node 115. In some embodiments, processor 1220 includes, for example, one or more computers, one or more central processing units (CPUs), one or more microprocessors, one or more applications, and/or other logic.

Memory 1230 is generally operable to store instructions, such as a computer program, software, an application including one or more of logic, rules, algorithms, code, tables, etc. and/or other instructions capable of being executed by a processor. Examples of memory 1230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1240 is communicatively coupled to processor 1220 and refers to any suitable device operable to receive input for radio network node 115, send output from radio network node 115, perform suitable processing of the input or output or both, communicate to other devices, or any combination of the preceding. Network interface 1240 includes appropriate hardware (e.g., port, modem, network interface card, etc.) and software, including protocol conversion and data processing capabilities, to communicate through a network.

Other embodiments of network node 115 include additional components (beyond those shown in FIGURE 12) responsible for providing certain aspects of the radio network node's functionality, including any of the functionality described above and/or any additional functionality (including any functionality necessary to support the solution described above). The various different types of radio access nodes may include components having the same physical hardware but configured (e.g., via programming) to support different radio access technologies, or may represent partly or entirely different physical components.

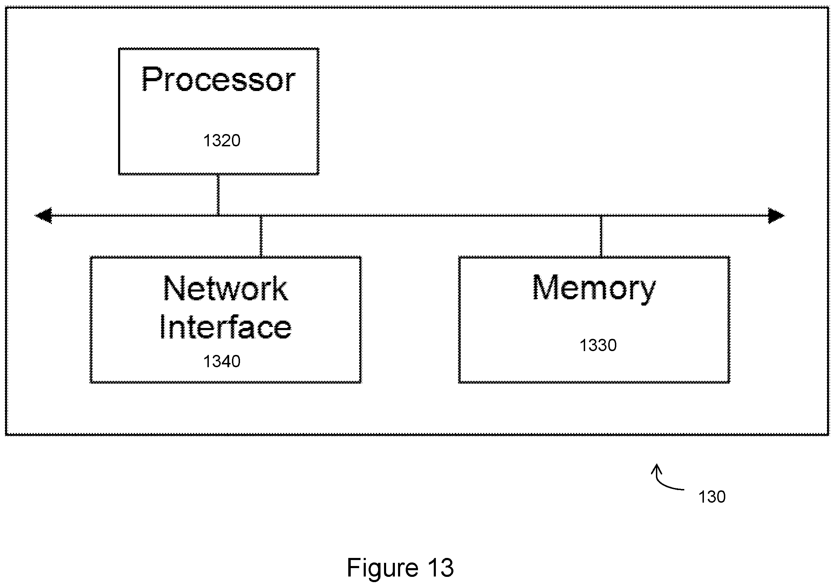

FIGURE 13 is a block diagram illustrating a core network node 130. Examples of core network node 130 can include a mobile switching center (MSC), a serving GPRS support node (SGSN), a mobility management entity (MME), a radio network controller (RNC), a base station controller (BSC), and so on. Core network node 130 includes processor 1320, memory 1330, and network interface 1340. In some embodiments, processor 1320 executes instructions to provide some or all of the functionality described above as being provided by core network node 130, memory 1330 stores the instructions executed by processor 1320, and network interface 1340 communicates signals to an suitable node, such as a gateway, switch, router, Internet, Public Switched Telephone Network (PSTN), radio network nodes 115, other core network nodes 130, etc.

Processor 1320 includes any suitable combination of hardware and software implemented in one or more modules to execute instructions and manipulate data to perform some or all of the described functions of core network node 130. In some embodiments, processor 1320 includes, for example, one or more computers, one or more central processing units (CPUs), one or more microprocessors, one or more applications, and/or other logic.

Memory 1330 is generally operable to store instructions, such as a computer program, software, an application including one or more of logic, rules, algorithms, code, tables, etc. and/or other instructions capable of being executed by a processor. Examples of memory 1330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1340 is communicatively coupled to processor 1320 and may refer to any suitable device operable to receive input for core network node 130, send output from core network node 130, perform suitable processing of the input or output or both, communicate to other devices, or any combination of the preceding. Network interface 1340 includes appropriate hardware (e.g., port, modem, network interface card, etc.) and software, including protocol conversion and data processing capabilities, to communicate through a network.

Other embodiments of core network node 130 include additional components (beyond those shown in FIGURE 13) responsible for providing certain aspects of the core network node's functionality, including any of the functionality described above and/or any additional functionality (including any functionality necessary to support the solution described above).

In particular embodiments, a wireless device in a cluster set of wireless devices is configured to operate as a virtual device to determine a beamforming weight for coordinated multipoint communication with a first network node. The wireless device includes circuitry containing instructions which, when executed, cause the wireless device to receive a first network RS from the first network node. The first network RS signal may be received via a first channel and may be coded with a first network beamforming weight associated with the cluster set. A second network RS coded with a second network beamforming weight may also be received via the first channel. The second network RS may be received from a second network node. A device beamforming weight may be calculated based on the first network RS received from the first network node and the second network RS received from the second network node. The calculation may be performed during a first iteration and may be independent of any channel information from any other wireless device in the cluster set of wireless devices operating as a virtual device. The calculation of the first iteration may be independent of any channel information associated with a second channel between at least one of the wireless devices of the cluster set and the first network node. A first device RS coded with the device beamforming weight may be sent to the first network node via the first channel.

In certain embodiments, the steps may be performed for a number of additional iterations to iteratively update the device beamforming weight. For example, the device beamforming weight may be iteratively updated in accordance with an iterative beamforming algorithm. In a particular embodiment, for example, the iterative beamforming algorithm may optimize a collection of Signal to Interference and Noise Ratios (SINRs).

In some embodiments, the channel information associated with the second channel between the first network node and the wireless devices of the cluster set may include at least one of a device beamforming weight, a channel response, and Channel State Information (CSI). Prior to receiving the first and second network RS, the wireless device may join the cluster set of wireless devices. For example, the wireless device may join the cluster set to form the virtual device in communication with the first network node and the virtual devices may include a Multiple-Input-Multiple-Output (MIMO) array formed by at least one antenna from each one of the wireless devices in the cluster set. In a particular embodiment, for example, the wireless device may send a message to the first network node for the wireless device to join the cluster set if a respective data rate between the wireless device and each of the other wireless devices of the cluster set is greater than a cluster uplink data rate. Each respective data rate may be based on a channel quality parameter of a device-to-device channel between the wireless device and each of the other wireless devices of the cluster set. As another example, the wireless device may send, to the first network node via the first channel, at least one channel quality parameter and a data rate of a device-to-device channel between the wireless device and each of the other wireless devices of the cluster set. As still another example, the wireless device may send the message to the first network node for the wireless device to join the cluster set in response to determining that a respective data rate between the wireless device and each of the other wireless devices of the cluster set is greater than an uplink rate between the wireless device and the first network node.

In some embodiments, the wireless device may communicate with the first network node using a first RAT and the other wireless devices of the cluster set using a first or a second radio access technology (RAT). For example, the second RAT may be selected from the group consisting of a short range wireless technology, an unlicensed spectrum technology, a Wireless Local Area Network (WLAN) technology, a Wi-Fi™ technology, a Bluetooth™ technology, an infrared technology, a 3rd Generation Partnership Project 3GPP technology, a Universal Mobile Telecommunications System UMTS technology, a Universal Terrestrial Radio Access Network UTRAN technology, a Long Term Evolution (LTE), a Long Term Evolution Unlicensed (LTE-U) technology, and a resource pool technology. As another example, the first RAT may be selected from the group consisting of a long range wireless technology, an unlicensed spectrum technology, a Wireless Local Area Network (WLAN) technology, a Wi-Fi™ technology, a 3rd Generation Partnership Project 3GPP technology, a Universal Mobile Telecommunications System UMTS technology, a Universal Terrestrial Radio Access Network UTRAN technology, a Long Term Evolution (LTE), and a Long Term Evolution Unlicensed (LTE-U) technology.

In a particular embodiment, a method for determining a beamforming weight for coordinated multipoint communication with a first network node is performed by a wireless device in a cluster set of wireless devices configured to operate as a virtual device. The method includes receiving from a first network node, via a first channel, a first network RS coded with a first network beamforming weight associated with the cluster set. A second network RS is received from a second network node via the first channel. A device beamforming weight is calculated based on the first network RS received from the first network node and the second network RS received from the second network node. The calculation may be performed during a first iteration and may be independent of any channel information from any other wireless device in the cluster set of the wireless devices operating as a virtual device. The calculation of the first iteration may also be independent of any channel information associated with a second channel between the other wireless devices of the cluster set and the first network node. A first device RS coded with the device beamforming weight is sent to the first network node via the first channel.

In certain embodiments, the steps of the method may be performed for a number of additional iterations to iteratively update the device beamforming weight. For example, the device beamforming weight may be iteratively updated in accordance with an iterative beamforming algorithm. In a particular embodiment, the device beamforming weight may be iteratively updated in accordance with an iterative beamforming algorithm that optimizes a collection of Signal to Interference and Noise Ratios (SINRs).

In some embodiments, the channel information associated with the second channel between the first network node and the other wireless devices of the cluster set includes at least one of a device beamforming weight, a channel response, and Channel State Information (CSI). Prior to receiving the first and second network RS, the method may include the wireless device joining the cluster set to form the virtual device in communication with the first network node. In a particular embodiment, the virtual device may include a Multiple-Input-Multiple-Output (MIMO) array formed by at least one antenna from each one of the wireless devices in the cluster set. For example, a message may be sent to the first network node for the wireless device to join the cluster set if a respective data rate between the wireless device and each of the other wireless devices of the cluster set is greater than a cluster uplink data rate. Each respective data rate may be determined based on a channel quality parameter of a device-to-device channel between the wireless device and each of the other wireless devices of the cluster set. As another example, the method may include sending, to the first network node via the first channel, at least one channel quality parameter and a data rate of a device-to-device channel between the wireless device and each of the other wireless devices of the cluster set. As still another example, the method may include sending the message to the first network node for the wireless device to join the cluster set in response to determining that a respective data rate between the wireless device and each of the other wireless devices of the cluster set is greater than an uplink rate between the wireless device and the first network node.

In some embodiments, the method may include the first wireless device communicating with the first network node using a first RAT and communicating with the other wireless devices of the cluster set using a second radio access technology (RAT). For example, the first RAT may be selected from the group consisting of a long range wireless technology, an unlicensed spectrum technology, a Wireless Local Area Network (WLAN) technology, a Wi-Fi™ technology, a 3rd Generation Partnership Project 3GPP technology, a Universal Mobile Telecommunications System UMTS technology, a Universal Terrestrial Radio Access Network UTRAN technology, a Long Term Evolution (LTE), and a Long Term Evolution Unlicensed (LTE-U) technology. As another example, the second RAT may be selected from the group consisting of a short range wireless technology, an unlicensed spectrum technology, a Wireless Local Area Network (WLAN) technology, a Wi-Fi™ technology, a Bluetooth™ technology, an infrared technology, a 3rd Generation Partnership Project 3GPP technology, a Universal Mobile Telecommunications System UMTS technology, a Universal Terrestrial Radio Access Network UTRAN technology, a Long Term Evolution (LTE), a Long Term Evolution Unlicensed (LTE-U) technology, and a resource pool technology.

Some embodiments of the disclosure may provide one or more technical advantages. For example, certain embodiments may improve spectral efficiency (Mbps/MHz) of the 3GPP air interface by exploiting the ever-increasing density of wireless devices in the network. Specifically, the performance of the LTE or Wi-Fi™ network may be enhanced by using device-to-device assistance from idle (non-scheduled) wireless devices to form a virtual MIMO device to improve the performance of the scheduled user. Certain embodiments may provide improvements in the areas of admission control (RAC), scheduling (L2), and physical layer (L1).

Another technical advantage may be the mitigation of interference by neighboring cells. As a result, the overall throughput (bps/Hz) of the network may be increased and the quality of service improved. In addition to improving capacity and throughput, an advantage may be the reduction or elimination of coverage holes for wireless devices in poor coverage areas. Still another technical advantage may be that communication overhead between wireless devices operating in a cluster may be reduced. Additionally, the complexity of computation of precoding weights in each wireless device may be significantly reduced.

Yet another advantage may be the elimination or reduction of additional processing requirements in the base station as related to the uplink or downlink CoMP. Additionally, certain embodiments may provide additional advantages with regard to the formation of clusters of wireless devices operating as a virtual device. For example, virtual MIMO gains may be achieved in a distributed manner that minimizes computational load at each network node. As another example, a technical advantage may be the minimization of bandwidth requirements between network nodes to achieve Coordinated Multipoint (CoMP) type gains.

The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of the following claims.

## Claims

**1.** A virtual device, comprising a plurality of wireless devices (110A-C) each having only one transmit antenna and grouped together for forming a cluster set (402A), for a network (100) comprising i) the plurality of wireless devices (110A-C), ii) a first network node (115A), and iii) a second network node (115B, 115C),

wherein the cluster set (402A) is configured to operate as the virtual device, in order to determine a beamforming weight for coordinated multipoint communication with the first network node (115A), wherein the plurality of wireless devices (110A-C) in the virtual device exchange messages before transmitting such messages to the first network node (115A), and

wherein each wireless device from the plurality of wireless devices (110A-C) from the virtual device, comprising circuitry containing instructions which, when executed, cause each wireless device from the plurality of wireless devices (110A-C) to:

    a) receive, from the first network node (115A) a first network reference signal, RS, precoded with a first network beamforming weight associated with the cluster set (402A);
    b) receive, from the second network node (115B) a second network RS precoded with a second network beamforming weight;
    c) calculate a device beamforming weight based on the first network RS received from the first network node (115A) and the second network RS received from the second network node (115B), the calculation being performed such that each wireless device (110A-C) in the one virtual device (402A) is adapted to calculate its own device beamforming weight based only on the network node-to-wireless device precoded first and second RSs received from the first and second network nodes (115A, 155B); and
    d) send to the first network node (115A), a first device RS coded with the calculated device beamforming weight, wherein each wireless device from the plurality of wireless devices (110A-C) is configured to repeat a) - d) for a number of additional iterations to iteratively update the device beamforming weight.

2. The virtual device of claim 1, wherein the plurality of wireless devices (110A-C) of the virtual device are further configured to join the cluster set (402A) of the plurality of wireless devices (110A-C) prior to receiving the first and second network RS.

3. The virtual device of claim 1, wherein the plurality of wireless devices (110A-C) of the virtual device are further configured to join the cluster set (402A) to form the virtual device in communication with the first network node (115A), the virtual device comprising a Multiple-Input-Multiple-Output, MIMO, array formed by transmit antennas of the plurality of wireless devices (110A-C) in the cluster set (402A).

4. The virtual device of claim 3, wherein the plurality of wireless devices (110A-C) of the virtual device are further configured to send a message to the first network node (115A) for a first wireless device (110A) from the plurality of wireless devices (110A-C), to join the cluster set (402A) if a respective data rate between the first wireless device (110A) and each of the other wireless devices (110B-C) of the cluster set (402A) is greater than a cluster uplink data rate, wherein the cluster uplink data rate is a data rate between the plurality of wireless devices (110A-C) in the cluster set (402A) forming the virtual device and the first network node (115A).

5. The virtual device of claim 4, wherein the plurality of wireless devices (110A-C) of the virtual device are further configured to determine each respective data rate based on a channel quality parameter of a device-to-device channel (406A) between the first wireless device (110A) and each of the other wireless devices (110B-C) of the cluster set.

6. The virtual device of claim 3, wherein the plurality of wireless devices (110A-C) of the virtual device are further configured to send, to the first network node (115A):

    at least one channel quality parameter; and
    a data rate of a device-to-device channel between the first wireless device (110A) and each of the other wireless devices (110B-C) of the cluster set (402A).

7. The virtual device of claim 3, wherein the plurality of wireless devices (110A-C) of the virtual device are further configured to send a message to the first network node (115A) for a first wireless device (110A) from the plurality of wireless devices (110A-C), to join the cluster set (402A) in response to determining that a respective data rate between the first wireless device (110A) and each of the other wireless devices (110B-C) of the cluster set (402A) is greater than an uplink rate between the first wireless device (110A) and the first network node (115A).

8. The virtual device of claim 1, wherein the plurality of wireless devices (110A-C) of the virtual device are further configured to:

    communicate with the first network node (115A) using a first Radio Access Technology, RAT; and
    communicate with the other wireless devices (110B-C) of the cluster set (402A) using the first RAT or a second RAT.

9. The virtual device of claim 8, wherein the first RAT is selected from the group consisting of a long range wireless technology, an unlicensed spectrum technology, a Wireless Local Area Network, WLAN, technology, a Wi-Fi technology, a 3rd Generation Partnership Project 3GPP technology, a Universal Mobile Telecommunications System UMTS technology, a Universal Terrestrial Radio Access Network UTRAN technology, a Long Term Evolution, LTE, and a Long Term Evolution Unlicensed, LTE-U, technology.

10. The virtual device of claim 8, wherein the second RAT is selected from the group consisting of a short range wireless technology, an unlicensed spectrum technology, a Wireless Local Area Network, WLAN, technology, a Wi-Fi technology, a Bluetooth technology, an infrared technology, a 3rd Generation Partnership Project 3GPP technology, a Universal Mobile Telecommunications System UMTS technology, a Universal Terrestrial Radio Access Network UTRAN technology, a Long Term Evolution, LTE, a Long Term Evolution Unlicensed, LTE-U, technology, and a resource pool technology.

11. A method performed by a virtual device comprising a plurality of wireless devices (110A-C) each having only one transmit antenna and grouped together for forming a cluster set (402A), in a network (100) comprising i) the plurality of wireless devices (110A-C), ii) a first network node (115A), and iii) a second network node (115B, 115C), wherein the cluster set (402A) operates as the virtual device, the method being for determining a beamforming weight for coordinated multipoint communication with a first network node (115A), and wherein the plurality of wireless devices (110A-C) in the virtual device exchange messages before transmitting such messages to the first network node (115A), wherein each wireless device from the plurality of wireless devices (110A-C) is:

    a) receiving (702), from the first network node (115A), a first network reference signal, RS precoded with a first network beamforming weight associated with the cluster set (402A);
    b) receiving (704), from the second network node (115B), a second network RS precoded with a second network beamforming weight;
    c) calculating (706) a device beamforming weight based on the first network RS received from the first network node (115A) and the second network RS received from the second network node (115B), the calculation being performed such that each wireless device (110A-C) in the one virtual device (402A) is adapted to calculate its own device beamforming weight based only on the network node-to-wireless device precoded first and second RSs received from the first and second network nodes (115A, 1556); and
    d) sending (708) to the first network node (115A), a first device RS coded with the calculated device beamforming weight, wherein each wireless device from the plurality of wireless devices (110A-C) in the virtual repeats a) - d) for a number of additional iterations to iteratively update the device beamforming weight.

12. A computer-readable medium comprising code portions which, when executed on processors (1020) of wireless devices (110A-C) forming a cluster set configured to operate as a virtual device, configure the processors to perform all steps of a method according to claim 11.

**Patentansprüche**

1. Virtuelle Vorrichtung, die eine Mehrzahl von drahtlosen Vorrichtungen (110A-C) umfasst, die jeweils nur eine Sendeantenne aufweisen und zum Ausbilden eines Clustersatzes (402A) für ein Netzwerk (100), das i) die Mehrzahl von drahtlosen Vorrichtungen (110A-C), ii) einen ersten Netzwerkknoten (115A) und iii) einen zweiten Netzwerkknoten (115B, 115C) umfasst, gruppiert sind,

    wobei der Clustersatz (402A) derart konfiguriert ist, dass er als die virtuelle Vorrichtung arbeitet, um ein Strahlausbildungsgewicht für eine koordinierte Mehrpunktkommunikation mit dem ersten Netzwerkknoten (115A) zu bestimmen, wobei die Mehrzahl der drahtlosen Vorrichtungen (110A-C) in der virtuellen Vorrichtung Nachrichten austauschen, bevor sie solche Nachrichten an den ersten Netzwerkknoten (115A) senden, und
    wobei jede drahtlose Vorrichtung aus der Mehrzahl der drahtlosen Vorrichtungen (110A-C) von der virtuellen Vorrichtung eine Schaltung umfasst, die Anweisungen enthält, die, wenn sie ausgeführt werden, jede drahtlose Vorrichtung aus der Mehrzahl der drahtlosen Vorrichtungen (110A-C) veranlassen, zum:

        a) Empfangen von dem ersten Netzwerkknoten (115A) eines ersten Netzwerkreferenzsignals, RS, das mit einem ersten Netzwerkstrahlausbildungsgewicht, das dem Clusterset (402A) zugeordnet ist, vorkodiert ist;
        b) Empfangen von dem zweiten Netzknoten (115B) eines zweiten Netzwerk-RS, das mit einem zweiten Netzwerkstrahlausbildungsgewicht vorkodiert ist;
        c) Berechnen eines Vorrichtungsstrahlausbildungsgewichts auf der Grundlage des von dem ersten Netzwerkknoten (115A) empfangenen ersten Netzwerk-RS und des von dem zweiten Netzwerkknoten (115B) empfangenen zweiten Netzwerk-RS, wobei die Berechnung derart durchgeführt wird, dass jede drahtlose Vorrichtung (110A-C) in der einen virtuellen Vorrichtung (402A) derart angepasst ist, dass sie ihr eigenes Vorrichtungsstrahlausbildungsgewicht nur auf der Grundlage der von dem ersten und dem zweiten Netzwerkknoten (115A, 155B) empfangenen ersten und zweiten vorcodierten Netzwerk-zu-drahtloser-Vorrichtungs-RSs berechnet; und

d) Übertragen eines ersten Vorrichtungs-RS, das mit dem berechneten Vorrichtungsstrahlausbildungsgewicht kodiert ist, an den ersten Netzwerkknoten (115A), wobei jede drahtlose Vorrichtung aus der Mehrzahl der drahtlosen Vorrichtungen (110A-C) derart konfiguriert ist, dass sie a) - d) für eine Anzahl von zusätzlichen Iterationen wiederholt, um das Vorrichtungsstrahlausbildungsgewicht iterativ zu aktualisieren.

2. Virtuelle Vorrichtung nach Anspruch 1, wobei die Mehrzahl der drahtlosen Vorrichtungen (110A-C) der virtuellen Vorrichtung ferner derart konfiguriert sind, dass sie dem Clustersatz (402A) der Mehrzahl der drahtlosen Vorrichtungen (110A-C) beitreten, bevor sie das erste und das zweite Netzwerk-RS empfangen.

3. Virtuelle Vorrichtung nach Anspruch 1, wobei die Mehrzahl der drahtlosen Vorrichtungen (110A-C) der virtuellen Vorrichtung ferner derart konfiguriert sind, dass sie dem Clustersatz (402A) beitreten, um die virtuelle Vorrichtung in Kommunikation mit dem ersten Netzwerkknoten (115A) auszubilden, wobei die virtuelle Vorrichtung ein Array mit mehreren Eingängen und mehreren Ausgängen (MIMO) umfasst, das durch Sendeantennen der Mehrzahl der drahtlosen Vorrichtungen (110A-C) in dem Clustersatz (402A) ausgebildet wird.

4. Virtuelle Vorrichtung nach Anspruch 3, wobei die Mehrzahl der drahtlosen Vorrichtungen (110A-C) der virtuellen Vorrichtung ferner derart konfiguriert sind, dass sie eine Nachricht an den ersten Netzwerkknoten (115A) für eine erste drahtlose Vorrichtung (110A) aus der Mehrzahl der drahtlosen Vorrichtungen (110A-C) übertragen, um dem Clustersatz (402A) beizutreten, wenn eine jeweilige Datenrate zwischen der ersten drahtlosen Vorrichtung (110A) und jeder der anderen drahtlosen Vorrichtungen (110B-C) des Clustersatzes (402A) größer ist als eine Cluster-Uplink-Datenrate, wobei die Cluster-Uplink-Datenrate eine Datenrate zwischen der Mehrzahl der drahtlosen Vorrichtungen (110A-C) in dem Clustersatz (402A), der die virtuelle Vorrichtung ausbildet, und dem ersten Netzwerkknoten (115A) ist.

5. Virtuelle Vorrichtung nach Anspruch 4, wobei die Mehrzahl der drahtlosen Vorrichtungen (110A-C) der virtuellen Vorrichtung ferner derart konfiguriert sind, dass sie jede jeweilige Datenrate auf der Grundlage eines Kanalqualitätsparameters eines Vorrichtung-zu-Vorrichtung-Kanals (406A) zwischen der ersten drahtlosen Vorrichtung (110A) und jeder der anderen drahtlosen Vorrichtungen (110B-C) des Clustersatzes bestimmen.

6. Virtuelle Vorrichtung nach Anspruch 3, wobei die Mehrzahl der drahtlosen Vorrichtungen (110A-C) der virtuellen Vorrichtung ferner derart konfiguriert sind, dass sie an den ersten Netzwerkknoten (115A) übertragen:

   wenigstens einen Kanalqualitätsparameter; und
   eine Datenrate eines Vorrichtung-zu-Vorrichtung-Kanals zwischen der ersten drahtlosen Vorrichtung (110A) und jeder der anderen drahtlosen Vorrichtungen (110B-C) des Clustersatzes (402A) .

7. Virtuelle Vorrichtung nach Anspruch 3, wobei die Mehrzahl der drahtlosen Vorrichtungen (110A-C) der virtuellen Vorrichtung ferner derart konfiguriert sind, dass sie eine Nachricht an den ersten Netzwerkknoten (115A) für eine erste drahtlose Vorrichtung (110A) aus der Mehrzahl der drahtlosen Vorrichtungen (110A-C) übertragen, um dem Clustersatz (402A) beizutreten, als Reaktion auf das Bestimmen, dass eine jeweilige Datenrate zwischen der ersten drahtlosen Vorrichtung (110A) und jeder der anderen drahtlosen Vorrichtungen (110B-C) des Clustersatzes (402A) größer ist als eine Uplink-Rate zwischen der ersten drahtlosen Vorrichtung (110A) und dem ersten Netzwerkknoten (115A) .

8. Virtuelle Vorrichtung nach Anspruch 1, wobei die Mehrzahl der drahtlosen Vorrichtungen (110A-C) der virtuellen Vorrichtung ferner derart konfiguriert sind, dass sie:

   mit dem ersten Netzknoten (115A) unter Verwendung einer ersten Funkzugangstechnologie, RAT, kommunizieren; und
   mit den anderen drahtlosen Vorrichtungen (110B-C) des Clustersatzes (402A) unter Verwendung der ersten RAT oder einer zweiten RAT kommunizieren.

9. Virtuelle Vorrichtung nach Anspruch 8, wobei die erste RAT aus der Gruppe ausgewählt ist, die aus einer drahtlosen Technologie mit großer Reichweite, einer Technologie mit unlizenziertem Spektrum, einer Technologie eines lokalen Netzwerks, WLAN, einer WiFi-Technologie, einer 3rd Generation Partnership Project, 3GPP-, Technologie, einer Universal Mobile Telecommunications System, UMTS-, Technologie, einer Universal Terrestrial Radio Access Network, UTRAN-, Technologie, einer Long Term Evolution, LTE-, und einer Long Term Evolution Unlicensed, LTE-U-, Technologie besteht.

10. Virtuelle Vorrichtung nach Anspruch 8, wobei die zweite RAT aus der Gruppe ausgewählt ist, die aus einer drahtlosen Technologie mit kurzer Reichweite, einer Technologie mit unlizenziertem Spektrum, einer Technologie eines lokalen Netzwerks, WLAN, einer WiFi-Technologie, einer Bluetooth-Technologie, einer Infrarottechnologie, einer 3rd Generation Partnership Project, 3GPP-, Technologie, einer Universal Mobile Telecommunications System, UMTS-, Technologie, einer Universal Terrestrial Radio Access Network, UTRAN-, Technologie, einer Long Term Evolution, LTE-, einer Long Term Evolution Unlicensed, LTE-U-, Technologie und einer Ressourcenpooltechnologie besteht.

11. Verfahren, das durch eine drahtlose Vorrichtung durchgeführt wird, die eine Mehrzahl von drahtlosen Vorrichtungen (110A-C) umfasst, die jeweils nur eine Sendeantenne aufweisen und zum Ausbilden eines Clustersatzes (402A) in einem Netzwerk (100), das i) die Mehrzahl von drahtlosen Vorrichtungen (110A-C), ii) einen ersten Netzwerkknoten (115A) und iii) einen zweiten Netzwerkknoten (115B, 115C) umfasst, gruppiert sind, wobei der Clustersatz (402A) als die virtuelle Vorrichtung arbeitet, wobei das Verfahren dazu dient, ein Strahlausbildungsgewicht für eine koordinierte Mehrpunktkommunikation mit einem ersten Netzwerkknoten (115A) zu bestimmen, und wobei die Mehrzahl der drahtlosen Vorrichtungen (110A-C) in der virtuellen Vorrichtung Nachrichten austauschen, bevor sie solche Nachrichten an den ersten Netzwerkknoten (115A) senden, wobei jede drahtlose Vorrichtung aus der Mehrzahl der drahtlosen Vorrichtungen (110A-C) Folgendes macht:

> a) Empfangen (702) von dem ersten Netzwerkknoten (115A) eines ersten Netzwerkreferenzsignals, RS, das mit einem ersten Netzwerkstrahlausbildungsgewicht, das dem Clustersatz (402A) zugeordnet ist, vorkodiert ist;
> b) Empfangen (704) von dem zweiten Netzknoten (115B) eines zweiten Netz-RS, das mit einem zweiten Netzwerkstrahlausbildungsgewicht vorkodiert ist;
> c) Berechnen (706) eines Vorrichtungsstrahlausbildungsgewicht auf der Grundlage des von dem ersten Netzwerkknoten (115A) empfangenen ersten Netzwerk-RS und des von dem zweiten Netzwerkknoten (115B) empfangenen zweiten Netzwerk-RS, wobei die Berechnung derart durchgeführt wird, dass jede drahtlose Vorrichtung (110A-C) in der einen virtuellen Vorrichtung (402A) derart angepasst ist, dass sie ihr eigenes Vorrichtungsstrahlausbildungsgewicht nur auf der Grundlage der von dem ersten und dem zweiten Netzwerkknoten (115A, 1556) empfangenen ersten und zweiten vorcodierten Netzwerk-zu-drahtloser-Vorrichtungs-RSs berechnet; und
> d) Übertragen (708) eines ersten Vorrichtungs-RS, das mit dem berechneten Vorrichtungsstrahlausbildungsgewicht kodiert ist, an den ersten Netzwerkknoten (115A), wobei jede drahtlose Vorrichtung aus der Mehrzahl von drahtlosen Vorrichtungen (110A-C) in der virtuellen a) - d) für eine Anzahl von zusätzlichen Iterationen wiederholt, um das Vorrichtungsstrahlausbildungsgewicht iterativ zu aktualisieren.

12. Computerlesbares Medium, das Codeabschnitte umfasst, die, wenn sie auf Prozessoren (1020) von drahtlosen Vorrichtungen (110A-C) ausgeführt werden, die einen Clustersatz ausbilden, der derart konfiguriert ist, dass er als eine virtuelle Vorrichtung arbeitet, die Prozessoren derart konfigurieren, dass sie alle Schritte eines Verfahrens nach Anspruch 11 durchführen.

**Revendications**

1. Dispositif virtuel, comprenant une pluralité de dispositifs sans fil (110A-C) ayant chacun une seule antenne de transmission et regroupés pour former un ensemble de grappe (402A), pour un réseau (100) comprenant i) la pluralité de dispositifs sans fil (110A-C), ii) un premier nœud de réseau (115A), et iii) un deuxième nœud de réseau (115B, 115C),

> dans lequel l'ensemble de grappe (402A) est configuré pour fonctionner en tant que dispositif virtuel, afin de déterminer un poids de formation de faisceau pour une communication multipoint coordonnée avec le premier nœud de réseau (115A), dans lequel la pluralité de dispositifs sans fil (110A-C) dans le dispositif virtuel échangent des messages avant de transmettre ces messages au premier nœud de réseau (115A), et
> dans lequel chaque dispositif sans fil de la pluralité de dispositifs sans fil (110A-C) provenant du dispositif virtuel, comprenant des circuits contenant des instructions qui, lorsqu'elles sont exécutées, amènent chaque dispositif sans fil de la pluralité de dispositifs sans fil (110A-C) à :

a) recevoir, à partir du premier nœud de réseau (115A) un premier signal de référence, RS, de réseau précodé avec un premier poids de formation de faisceau de réseau associé à l'ensemble de grappe (402A) ;

b) recevoir, à partir du deuxième nœud de réseau (115B) un deuxième RS de réseau précodé avec un deuxième poids de formation de faisceau de réseau ;

c) calculer un poids de formation de faisceau de dispositif sur la base du premier RS de réseau reçu à partir du premier nœud de réseau (115A) et du deuxième RS de réseau reçu à partir du deuxième nœud de réseau (115B), le calcul étant effectué de telle sorte que chaque dispositif sans fil (110A-C) dans le dispositif virtuel (402A) est adapté pour calculer son propre poids de formation de faisceau de dispositif sur la base uniquement des premier et deuxième RS précodés de nœud de réseau-à-dispositif sans fil reçus à partir des premier et deuxième nœuds de réseau (115A, 155B) ; et

d) envoyer au premier nœud de réseau (115A), un premier dispositif RS codé avec le poids de formation de faisceau de dispositif calculé, dans lequel chaque dispositif sans fil de la pluralité de dispositifs sans fil (110A-C) est configuré pour répéter a) - d) pour un certain nombre d'itérations supplémentaires pour mettre à jour de manière itérative le poids de formation de faisceau de dispositif.

2. Dispositif virtuel selon la revendication 1, dans lequel la pluralité de dispositifs sans fil (110A-C) du dispositif virtuel sont en outre configurés pour rejoindre l'ensemble de grappe (402A) de la pluralité de dispositifs sans fil (110A-C) avant de recevoir le premier et deuxième RS de réseau.

3. Dispositif virtuel selon la revendication 1, dans lequel la pluralité de dispositifs sans fil (110A-C) du dispositif virtuel sont en outre configurés pour rejoindre l'ensemble de grappe (402A) pour former le dispositif virtuel en communication avec le premier nœud de réseau (115A), le dispositif virtuel comprenant un réseau à entrées multiples et sorties multiples, MIMO, formé par des antennes de transmission de la pluralité de dispositifs sans fil (110A-C) dans l'ensemble de grappe (402A).

4. Dispositif virtuel selon la revendication 3, dans lequel la pluralité de dispositifs sans fil (110A-C) du dispositif virtuel sont en outre configurés pour envoyer un message au premier nœud de réseau (115A) pour un premier dispositif sans fil (110A) de la pluralité de dispositifs sans fil (110A-C), pour rejoindre l'ensemble de grappe (402A) si un débit de données respectif entre le premier dispositif sans fil (110A) et chacun des autres dispositifs sans fil (110B-C) de l'ensemble de grappe (402A) est supérieur à un débit de données de liaison montante de grappe, dans lequel le débit de données de liaison montante de grappe est un débit de données entre la pluralité de dispositifs sans fil (110A-C) dans l'ensemble de grappe (402A) formant le dispositif virtuel et le premier nœud de réseau (115A) .

5. Dispositif virtuel selon la revendication 4, dans lequel la pluralité de dispositifs sans fil (110A-C) du dispositif virtuel sont en outre configurés pour déterminer chaque débit de données respectif sur la base d'un paramètre de qualité de canal d'un canal de dispositif à dispositif (406A) entre le premier dispositif sans fil (110A) et chacun des autres dispositifs sans fil (110B-C) de l'ensemble de grappe.

6. Dispositif virtuel selon la revendication 3, dans lequel la pluralité de dispositifs sans fil (110A-C) du dispositif virtuel sont en outre configurés pour envoyer, au premier nœud de réseau (115A) :

au moins un paramètre de qualité de canal ; et
un débit de données d'un canal dispositif à dispositif entre le premier dispositif sans fil (110A) et chacun des autres dispositifs sans fil (110B-C) de l'ensemble de grappe (402A).

7. Dispositif virtuel selon la revendication 3, dans lequel la pluralité de dispositifs sans fil (110A-C) du dispositif virtuel sont en outre configurés pour envoyer un message au premier nœud de réseau (115A) pour un premier dispositif sans fil (110A) de la pluralité de dispositifs sans fil (110A-C), pour rejoindre l'ensemble de grappe (402A) en réponse à la détermination qu'un débit de données respectif entre le premier dispositif sans fil (110A) et chacun des autres dispositifs sans fil (110B-C) de l'ensemble de grappe (402A) est supérieur à un débit de liaison montante entre le premier dispositif sans fil (110A) et le premier nœud de réseau (115A).

8. Dispositif virtuel selon la revendication 1, dans lequel la pluralité de dispositifs sans fil (110A-C) du dispositif virtuel sont en outre configurés pour :

communiquer avec le premier nœud de réseau (115A) en utilisant une première technologie d'accès radio, RAT ; et
communiquer avec les autres dispositifs sans fil (110B-C) de l'ensemble de grappe (402A) en utilisant la première RAT ou une deuxième RAT.

9. Dispositif virtuel selon la revendication 8, dans lequel le premier RAT est sélectionné dans le groupe constitué d'une technologie sans fil longue portée, d'une technologie utilisant un spectre exploitable sans licence, d'un réseau local sans fil, d'une technologie WLAN, d'une technologie Wi-Fi, d'une technologie de projet de partenariat de 3e génération, 3GPP, d'une technologie de système universel de télécommunications mobiles, UMTS, d'une technologie de réseau d'accès radio terrestre universel, UTRAN, d'une technologie d'évolution à long terme, LTE, et d'une technologie d'évolution à long terme sans licence, LTE-U.

10. Dispositif virtuel selon la revendication 8, dans lequel la deuxième RAT est sélectionné dans le groupe constitué d'une technologie sans fil à courte portée, d'une technologie utilisant un spectre exploitable sans licence, d'un réseau local sans fil, d'une technologie WLAN, d'une technologie Wi-Fi, d'une technologie Bluetooth, d'une technologie infrarouge, d'une technologie de projet de partenariat de 3e génération, 3GPP, d'une technologie de système universel de télécommunications mobiles, UMTS, d'une technologie de réseau d'accès radio terrestre universel, UTRAN, d'une technologie d'évolution à long terme, LTE, d'une technologie d'évolution à long terme sans licence, LTE-U, et d'une technologie de pool de ressources.

11. Procédé réalisé par un dispositif virtuel comprenant une pluralité de dispositifs sans fil (110A-C) ayant chacun une seule antenne de transmission et regroupés pour former un ensemble de grappe (402A), dans un réseau (100) comprenant i) la pluralité de dispositifs sans fil (110A-C), ii) un premier nœud de réseau (115A), et iii) un deuxième nœud de réseau (115B, 115C),
dans lequel l'ensemble de grappe (402A) fonctionne en tant que dispositif virtuel, le procédé étant utilisé pour déterminer un poids de formation de faisceau pour une communication multipoint coordonnée avec un premier nœud de réseau (115A), et dans lequel la pluralité de dispositifs sans fil (110A-C) dans le dispositif virtuel échangent des messages avant de transmettre ces messages au premier nœud de réseau (115A), dans lequel chaque dispositif sans fil de la pluralité de dispositifs sans fil (110A-C) :

a) reçoit (702), à partir du premier nœud de réseau (115A), un premier signal de référence, RS, de réseau précodé avec un premier poids de formation de faisceau de réseau associé à l'ensemble de grappe (402A) ;
b) reçoit (704), à partir du deuxième nœud de réseau (115B), un deuxième RS de réseau précodé avec un deuxième poids de formation de faisceau de réseau ;
c) calcule (706) un poids de formation de faisceau de dispositif sur la base du premier RS de réseau reçu à partir du premier nœud de réseau (115A) et du deuxième RS de réseau reçu à partir du deuxième nœud de réseau (115B), le calcul étant effectué de telle sorte que chaque dispositif sans fil (110A-C) dans le dispositif virtuel (402A) est adapté pour calculer son propre poids de formation de faisceau de dispositif sur la base uniquement des premier et deuxième RS précodés de nœud de réseau-à-dispositif sans fil reçus à partir des premier et deuxième nœuds de réseau (115A, 1556) ; et
d) envoie (708) au premier nœud de réseau (115A), un premier RS de dispositif codé avec le poids de formation de faisceau de dispositif calculé, dans lequel chaque dispositif sans fil de la pluralité de dispositifs sans fil (110A-C) dans le virtuel répète a) - d) pour un certain nombre d'itérations supplémentaires pour mettre à jour de manière itérative le poids de formation de faisceau de dispositif.

12. Support lisible par ordinateur comprenant des parties de code qui, lorsqu'elles sont exécutées sur des processeurs (1020) de dispositifs sans fil (110A-C) formant un ensemble de grappe configurés pour fonctionner comme un dispositif virtuel, configurent les processeurs pour exécuter toutes les étapes d'un procédé selon la revendication 11.

130
Packet Core Network

115A Base Station

115B Base Station

115C Base Station

110A

110B

110C

125

100

EP 3 085 141 B1

Figure 2

# Figure 3

115A  eNB 1

206A

115B  eNB 2

RS's precoded with the beamforming weights

202A-E

110A

110B

204A-D

206B

RS's precoded with the beamforming weights

115A  eNB 1

115B  eNB 2

206C

RS's precoded with the beamforming weights

202A-E

110A

110B

204A-D

RS's precoded with the beamforming weights

115A  eNB 1

115B  eNB 2

Time

Figure 4

EP 3 085 141 B1

EP 3 085 141 B1

RS's (that are
precoded
with the
beamforming
weights) from
all co-channel
eNB's

504A       110A

504B       110B

504C       110C

504D       110D

504E       110E

A Virtual UE

500

Figure 5

# Figure 6

# Figure 7

702

Receive first network reference signal from first network node via a first channel

704

Receive second network reference signal from second network node via the first channel

706

Calculate a device beamforming weight base don the first network reference signal and the second network reference signal

708

Send a first device reference signal coded with the device beamforming weight to t he network nodes

END

# Figure 8

START

802

Determine a respective transfer data rate between a wireless device and each one of a plurality of wireless devices forming a cluster set

804

Determine a cluster uplink data rate between the cluster set of wireless devices and a network node

806

Determine that each respective transfer data rate between the wireless device and each one of the wireless devices in the cluster set is greater than the cluster uplink data rate

808

Send a message to the network node requesting to join the cluster set.

810

Join cluster set

END

# Figure 9

START

902

Determine a respective transfer data rate between a wireless device and each one of a plurality of wireless devices forming a cluster set

904

Determine a cluster uplink data rate between the cluster set of wireless devices and a network node

906

Determine that each respective transfer data rate between the wireless device and each one of the wireless devices in the cluster set is greater than the cluster uplink data rate

908

Send a message to the network node requesting to join the cluster set.

910

Receive, from the network node, a request for channel quality information

912

Provide a data rate between the wireless device and each on of the plurality of wireless devices forming the cluster set.

914

Receive message identifying that wireless device may join the cluster set.

916

Join cluster set

END

Figure 10

EP 3 085 141 B1

Figure 11

EP 3 085 141 B1

1220

Processor

1240

Network Interface

1210

Transceiver

Memory

1230

115

Figure 12

Figure 13

**EP 3 085 141 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ALCATEL-LUCENT.** UL Transmit Beamforming for UL MIMO Enhancement. *3GPP draft R1-112422,* 19 August 2011
- **S. HOSSEIN SEYEDMEHDI.** *An Efficient Clustering Algorithm for Device-to-Device Assisted Virtual MI-MO,* 10 December 2013
- Proposal of multiple sites coordination for LTE-A TDD. *3GPP draft R1-084290,* 05 November 2008
- Long-Term Channel Information-Based CoMP Beamforming in LTE-Advanced Systems. **HUI WON JE.** Global Telecommunications Conference (GLOBECOM). IEEE, 05 December 2011